# EUROPÄISCHE PATENTSCHRIFT

(11) **EP 3 573 909 B1**
(45) Veröffentlichungstag und Bekanntmachung des Hinweises auf die Patenterteilung: **19.03.2025**
(21) Anmeldenummer: 17777572.3
(22) Anmeldetag: 29.09.2017
(51) Int. Cl.: B65G 54/02

(54) **LÄUFER FÜR LANGSTATOR-LINEARMOTORSYSTEME MIT VERSCHLEISSARMER LAGERUNG**
ROTORS FOR LONG-STATOR-LINEAR-MOTOR SYSTEMS, HAVING A LOW-WEAR MOUNTING ARRANGEMENT
CURSEURS POUR SYSTÈMES À MOTEUR LINÉAIRE À STATOR LONG PRÉSENTANT UN MONTAGE ENTRAÎNANT UNE USURE RÉDUITE

(30) Priorität: 27.01.2017 DE 102017201310
(43) Veröffentlichungstag der Anmeldung: 04.12.2019
(73) Patentinhaber: Krones AG, 93073 Neutraubling (DE)
(72) Erfinder: HARTUNG, Alexander, 93073 Neutraubling (DE); SCHAEFER, Heiner, 93073 Neutraubling (DE); ZEINER, Peter, 93073 Neutraubling (DE); SENN, Konrad, 93073 Neutraubling (DE); KILGENSTEIN, Torsten, 93073 Neutraubling (DE); ELSPERGER, Stefan, 93073 Neutraubling (DE); NEUBAUER, Michael, 93073 Neutraubling (DE); KIESLINGER, Manfred, 93073 Neutraubling (DE)
(74) Vertreter: Grünecker Patent- und Rechtsanwälte PartG mbB
(86) Internationale Anmeldenummer: PCT/EP2017/074759
(87) Internationale Veröffentlichungsnummer: WO 2018/137796

(56) Entgegenhaltungen:
- EP-A1- 0 597 416
- EP-A1- 0 636 561
- EP-A1- 3 078 617
- JP-A- 2004 051 045
- KR-A- 20140 014 529
- US-A- 4 026 572
- US-A1- 2003 230 941
- US-A1- 2005 256 774

## Beschreibung

### Gebiet der Erfindung

Die vorliegende Erfindung betrifft Läufer für Langstator-Linearmotorsysteme, welche eine besonders verschleißarme Lagerung aufweisen.

### Stand der Technik

Läufer, Schlitten, Shuttles oder Mover, die mittels eines Langstator-Linearmotors individuell entlang einer Transportbahn bewegt werden, sind im Stand der Technik in vielfältigen Ausführungsformen bekannt. Häufig werden die Läufer mittels Laufrollen an Führungsschienen gelagert, auf denen die Abrollflächen der Laufrollen abrollen. Der Vortrieb der Läufer wird hierbei durch magnetische Wechselwirkung zwischen den Elektromagneten und/oder Permanentmagneten des entlang der Transportbahn angeordneten Langstators und dem mit entsprechenden Magneten versehenen Sekundärteil der Läufer bewirkt.

Je nach Einsatz der Läufer bzw. des Langstator-Linearmotorsystems ist die Transportbahn im Allgemeinen geschlossen ausgebildet. Daher weisen die Transportbahn und damit die Führungsschienen bzw. Laufschienen neben geraden Teilstrecken auch gekrümmte Teilstrecken, also Kurvenstücke, auf.

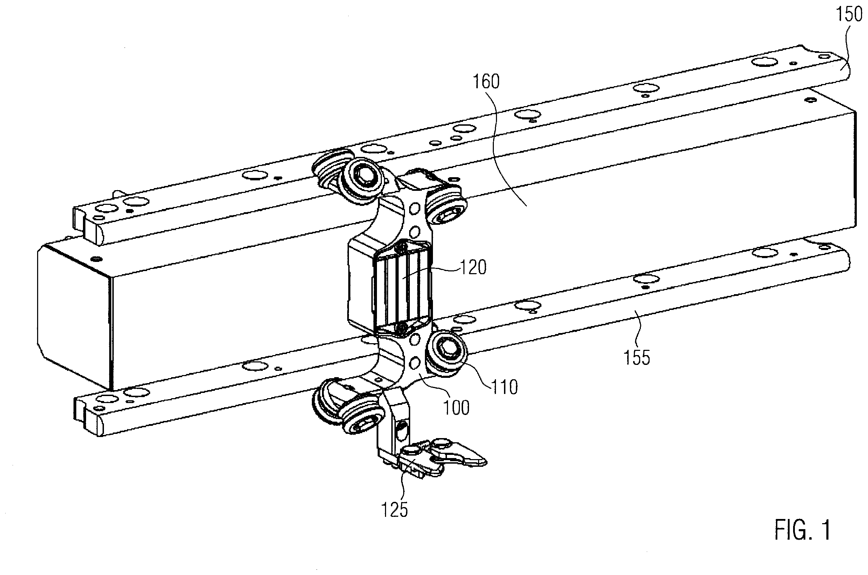

Bei herkömmlichen Läufern sind die Rollenachsen, mit denen die Laufrollen an den Läufern drehbar gelagert sind, in ihrer Ausrichtung starr ausgebildet. Eine solche Weiterbildung ist beispielsweise in Figur 1 dargestellt, welche einen Läufer 100 sowie einen Langstator-Linearmotor des Stands der Technik zeigt. Der mit einem Sekundärteil 120 ausgebildete Läufer 100 ist mit einer Vielzahl von Rollen 1 10 an oberen Führungsschienen 150 und unteren Führungsschienen 155 gelagert. Der Übersichtlichkeit halber ist in der Figur 1 jeweils nur die hintere Führungsschiene des oberen bzw. unteren Führungsschienenpaares 150 bzw. 155 dargestellt. Der Läufer 100 weist zu jedem Führungsschienenpaar zwei Rollenpaare auf, mittels derer der Läufer entlang der Führungsschienen beweglich von unten und oben an dem jeweiligen Führungsschienenpaar gelagert ist. Die Rollen 1 10 sind, wie in der Figur 1 angedeutet, mit einer starren, d.h. bezüglich des Läufers 100 raumfest angeordneten, Rollenachse an dem Läufer 100 befestigt.

Neben dem Sekundärteil 120 weist der hier exemplarisch dargestellte Läufer 100 auch eine Haltevorrichtung 125, beispielsweise in Form einer Neckhandlingklammer zum Transport von Flaschen, auf. Die Magnete des Sekundärteils 120 wechselwirken mit den im Allgemeinen einzeln ansteuerbaren Spulen oder Elektromagneten des Langstators 160, der in der Figur 1 der Einfachheit halber lediglich schematisch dargestellt ist. Zusätzlich zu dem dargestellten Langstator weist das Langstator-Linearmotorsystem im Allgemeinen einen weiteren Langstator auf, der dem gezeigten Langstator 160 gegenüberliegt. Durch die magnetische Wechselwirkung mit den Langstatoren wird der Läufer 100 gezielt entlang der Führungsschienen bewegt. Dabei wird der Läufer über die an den oberen und unteren Führungsschienen 150 bzw. 155 angreifenden Rollen 1 10 sicher zwischen den Führungsschienen gehalten.

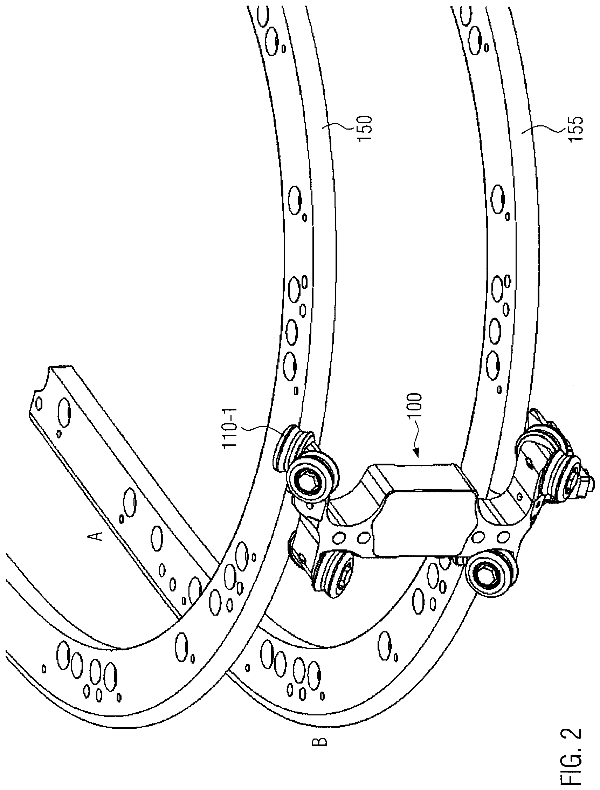

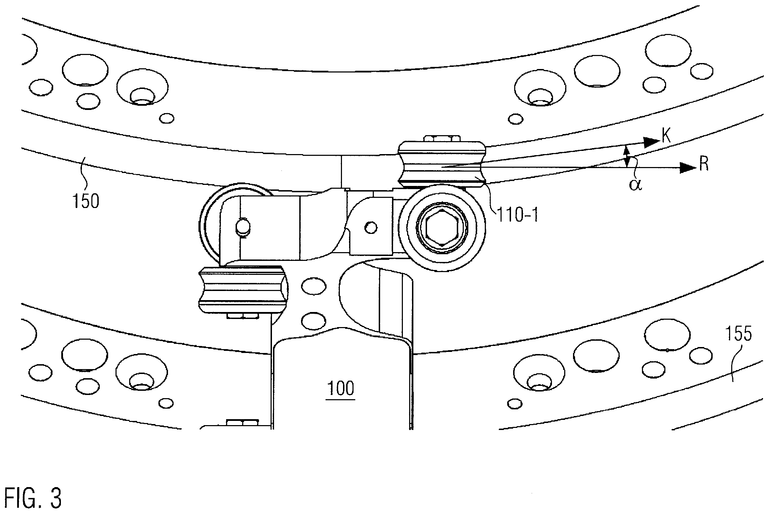

Wie in Figur 2 gezeigt weist die Transportbahn eines Langstator-Linearmotorsystems im Allgemeinen neben geraden Teilstrecken A auch Kurvenstücke B auf, entlang derer die Führungsschienen 150 und 155 mit einem bestimmten Kurvenradius gekrümmt sind. Bei der dargestellten starren Konfiguration der Rollenachsen des exemplarischen Rollenpaares 1 10-1 kommt es bei der Kurvenfahrt jedoch zu einem sogenannten Spurfehler. Während die Rollenachse der Laufrollen 1 10 bei dem in der Figur 1 gezeigten geraden Stück der Transportbahn senkrecht zur Fahrtrichtung bzw. Laufrichtung ausgerichtet ist, weicht sie bei der Kurvenfahrt wie in Figur 3 dargestellt von dieser Ausrichtung ab.

Exemplarisch ist in Figur 3 die Ausrichtung der Rolle, d.h. die durch die starre Rotationsachse vorgegebene Laufrichtung, als Vektor R angedeutet. Zusätzlich ist die Fahrtrichtung, welche durch den Verlauf der Führungsschienen 150 bzw. 155, genauer durch eine Tangente an die Führungsschienen, vorgegeben ist, als Vektor K gezeigt. Da die Ausrichtung R der Rolle und die Fahrtrichtung K bei der Kurvenfahrt voneinander abweichen, kann die Rolle 1 10-1 nicht mehr korrekt abrollen. Vielmehr ergibt sich ein Spurfehler a, der sich als Winkel zwischen den Vektoren R und K darstellt. Dies bedeutet, dass die Rolle 1 10-1 nicht mehr korrekt gerade abrollen kann, sondern zusätzlich eine seitliche Verschiebung erfährt. Dadurch entsteht ein Gleitreibungsanteil auf der Lauffläche der Rolle, der zu vorzeitigem Verschleiß der Rollen führt. Der Effekt ist ähnlich einer falsch eingestellten Spur beim Auto.

Läufer können sowohl Tragrollen aufweisen, die einen Teil der vertikal ausgerichteten Schwerkraft aufnehmen, als auch Führungsrollen, die nur horizontale Kräfte aufnehmen. Die Führungsrollen sind somit bei Geradeausfahrt, abgesehen von einer möglicherweise einseitig wirkenden Statornormalkraft, im Wesentlichen kraftfrei und werden nur bei der Kurvenfahrt mit Fliehkräften belastet. Bei Rollen, deren Rotationsachsen bzw. Rollenachsen parallel oder schräg zur Bewegungsebene bzw. Führungsebene ausgerichtet sind, zu denen auch die Tragrollen gehören, kommt es bei der Kurvenfahrt zu Schlupf, dem sogenannten Radieren, da die Rotationsachsen nicht zum Mittelpunkt des Kurvenradius der Führungsschiene ausgerichtet sind. Diese inkorrekte Abwälzung führt zu einem erhöhten Verschleiß der Rollen bzw. der Führungsschiene. Der Schlupf bzw. das Radieren tritt jedoch auch bei Führungsrollen auf, deren Rollenachsen parallel oder schräg zur Bewegungsebene ausgerichtet sind. Zur besseren Abgrenzung werden im Folgenden daher alle Rollen, deren Rollenachse eine parallele Komponente besitzt, unabhängig davon, ob sie einen Teil der Schwerkraft aufnehmen, als Laufrollen bezeichnet, während solche Rollen, deren Rollenachse senkrecht zur Bewegungsebene ausgerichtet ist, als (reine) Führungsrollen bezeichnet werden.

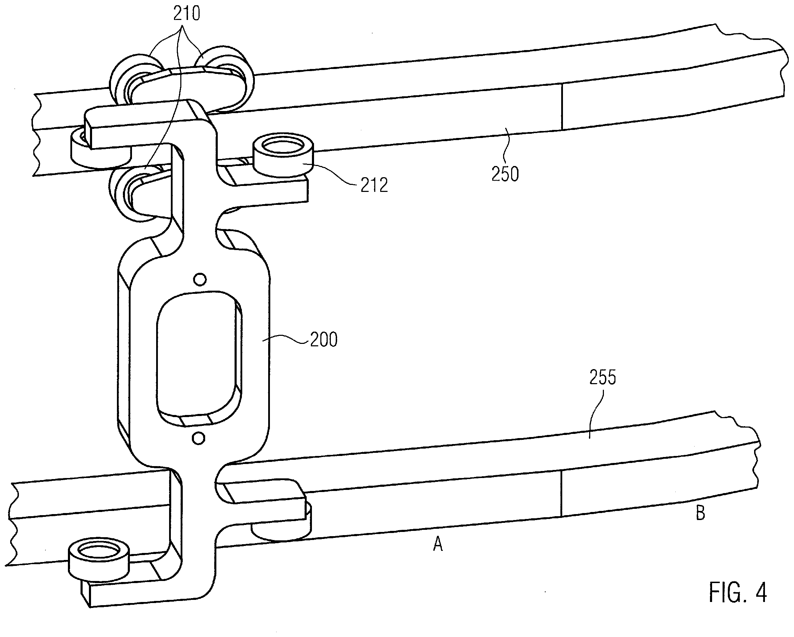

Die Situation ist in Figur 4 gezeigt, die eine alternative Ausbildung eines Läufers und einer Transportbahn gemäß dem Stand der Technik zeigt. In der in der Figur 4 gezeigten Konfiguration sind zwei Führungsschienen 250 und 255 senkrecht übereinander angeordnet, welche jeweils einen geraden Bereich A und ein Kurvenstück B aufweisen. Der Läufer 200 ist dabei sowohl über Laufrollen 210 als auch über Führungsrollen 212 an den Führungsschienen gelagert.

In der dargestellten Weiterbildung ist die Rotationsachse der Laufrollen 210 parallel zur Bewegungsebene bzw. Führungsebene ausgerichtet, während die Rotationsachse der Führungsrollen 212 senkrecht zur Bewegungsebene bzw. Führungsebene ausgerichtet ist.

Hier und im Folgenden ist unter der Bewegungsebene bzw. Führungsebene stets die Ebene zu verstehen, in der die Läufer bewegt werden. Hierbei wird davon ausgegangen, dass die gesamte Transportbahn bzw. der betrachtete Teilabschnitt der Transportbahn in einer Ebene angeordnet ist. Insbesondere liegen die von den Führungsschienen beschriebenen Kurven sowie deren Kurvenradius in der Bewegungsebene bzw. Führungsebene. Bei parallel geführten Führungsschienen, die in der von ihnen aufgespannten Ebene gekrümmt sind, entspricht diese Ebene somit der Bewegungsebene bzw. Führungsebene.

Der oben erwähnte Schlupf bzw. das Abweichen der Rollrichtung R von der Fahrtrichtung K tritt im Allgemeinen bei den Rollen auf, deren Rotationsachse zumindest eine Komponente parallel zur Bewegungsebene bzw. Führungsebene hat, die also schräg oder parallel zur Bewegungsebene bzw. Führungsebene ausgerichtet ist. Dabei ist der auftretende erhöhte Verschleiß umso stärker, je größer diese Komponente bzw. je paralleler die Rotationsachse zur Bewegungsebene ist. Besonders groß ist der Verschleiß somit bei den in der Figur 4 gezeigten vertikalen Tragrollen 210. Ein Läufer welcher die Merkmale des Oberbegriffs des Anspruchs 1 offenbart ist aus der EP 0 636 561 A1 bekannt.

Der vorliegenden Erfindung liegt somit die Aufgabe zugrunde, Läufer und ein Langstator-Linearmotorsystem zur Verfügung zu stellen, welche ein verbessertes Abrollverhalten und damit einen reduzierten Verschleiß ermöglichen. Insbesondere soll das oben erwähnte Radieren der Laufrollen bei der Kurvenfahrt vermieden werden. Ganz allgemein liegt der vorliegenden Erfindung die Aufgabe zugrunde, ein Transportsystem mit verbesserter Standzeit und reduziertem Wartungsaufwand zur Verfügung zu stellen.

### Beschreibung der Erfindung

Die oben genannten Aufgaben werden gelöst durch einen Läufer für ein Langstator-Linearmotorsystem, wobei der Läufer wenigstens ein Sekundärteil zur magnetischen Wechselwirkung mit wenigstens einem Langstator-Linearmotorsystem und wenigstens zwei Rollen zur Lagerung des Läufers an parallelen Führungsschienen des Langstator-Linearmotorsystems umfasst, und weiterhin wenigstens eine Rolle der wenigstens zwei Rollen mit einer Lenkungsdrehachse mit integriertem Nachlauf aufweist, wobei die wenigstens eine Rolle mittels eines Bolzens über eine asymmetrische und/oder schräge Bohrung an einer Rollenachse gelagert ist und weiterhin einen an dem Bolzen gelagerten Pendelring mit außenliegendem Wälz- oder Gleitlager aufweist, wobei die Bohrung quer zur Rollenachse vorgesehen ist, wobei die Bohrung außermittig durch die Rollenachse und/oder schräg zur Bewegungsebene ausgebildet ist, wobei der Pendelring derart ausgebildet ist, dass er innerhalb eines vorgegebenen Winkelbereichs um die Geradeausstellung pendeln kann und wobei auch der Pendelring außermittig und/oder schräg an dem Bolzen gelagert ist.

Nach dem Ackermann-Prinzip sollen sich bei der Kurvenfahrt die Verlängerungen aller Radachsen ungefähr im Kurvenmittelpunkt schneiden. Bei schräg zur Bewegungsebene ausgerichteten Rollenachsen bzw. Rotationsachsen der Rollen gilt dieses Prinzip für die parallel zur Bewegungsebene ausgerichtete Komponente der Rotationsachsen. Ein Spurfehler lässt sich somit dadurch vermeiden, dass die Stellungen der Rotationsachsen abhängig vom Kurvenradius der Führungsschienen gewählt werden. Im Idealfall ist die Stellung jeder Laufrolle der Läufer stets derart, dass sich die Parallelkomponenten der Rotationsachsen, d.h. die Projektion der Rotationsachsen auf die Bewegungsebene bzw. Führungsebene, im Mittelpunkt der Kurve schneiden. Bei variierendem Kurvenradius soll dies stets für das von dem Läufer belegte Kurvenstück gelten.

Die vorliegende Erfindung stellt hierzu zwei alternative Lösungsmöglichkeiten vor, die zudem miteinander kombiniert werden können.

Einerseits können jeweils zwei Laufrollen des Läufers als Rollenpaar drehbar auf einem Drehschemel des Läufers gelagert werden. Wenn eine Rolle des Rollenpaares an einer ersten Führungsschiene gelagert ist und die andere Rolle des Rollenpaares an einer zweiten Führungsschiene gelagert ist, wobei die erste und die zweite Führungsschiene die Bewegungsebene, d.h. Führungsebene, aufspannen, führt die Rotierbarkeit des Drehschemels dazu, dass sich die Parallelkomponenten der Rotationsachsen des Rollenpaares in Richtung des Kurvenradius, d. h. zum Kurvenmittelpunkt hin, auszurichten suchen. Der Drehschemel kann hierzu um eine Achse senkrecht zur Bewegungsebene bzw. Führungsebene rotierbar ausgebildet sein, beispielsweise indem er mittels eines Bolzens, des sogenannten Königsbolzens, an dem Läufer gelagert ist.

Gemäß einer Weiterbildung, bei der die Läufer nur einseitig an vertikal übereinander stehenden Führungsschienen angeordnet sind, können erfindungsgemäß auch einzelne Rollen an den Drehschemeln drehbar gelagert sein. Auch hier können die Drehschemel um eine Achse senkrecht zur Bewegungsebene bzw. Führungsebene rotierbar ausgebildet sein, wobei die Bewegungsebene bzw. Führungsebene jedoch nicht mehr von den Führungsschienen aufgespannt wird, sondern vielmehr senkrecht zu der von den Führungsschienen aufgespannten Ebene ausgerichtet ist. Schließlich sind auch Weiterbildungen mit mehr als einem Rollenpaar pro Drehschemel denkbar.

Erfindungsgemäß ist wenigstens eine Laufrolle des Läufers ist einzeln lenkbar mit einer Lenkungsdrehachse mit integriertem Nachlauf ausgestattet. Dies wird erfindungsgemäß dadurch realisiert werden, dass die Rolle mittels eines Bolzens über eine asymmetrische und/oder schräge Bohrung an einer Rollenachse gelagert ist und weiterhin einen an dem Bolzen gelagerten Pendelring mit außenliegendem Wälz- oder Gleitlager aufweist. Die Bohrung ist dabei quer zur Rollenachse vorgesehen, wobei die Bohrung außermittig durch die Rollenachse und/oder schräg zur Bewegungsebene ausgebildet ist.

Als Nachlauf bzw. Nachlaufstrecke bezeichnet man den Abstand in Längsrichtung zwischen dem Spurpunkt, d.h. dem Durchstoßpunkt der Achse des oben erwähnten Bolzens durch die Fahrbahnfläche, also durch die Bewegungsebene, und dem Radaufstandspunkt, d.h. dem Mittelpunkt der Rollenaufstandsfläche. Indem der Bolzen über eine asymmetrische Bohrung d.h. eine Bohrung, die nicht mittig durch die Rollenachse geht, an der die Rolle gelagert ist, und/oder eine schräge Bohrung, d.h. eine Bohrung, die nicht senkrecht zur Bewegungsebene durch die Rollenachse geht, an der festen, d.h. nicht drehbaren, Rollenachse gelagert ist, tritt erfindungsgemäß ein Nachlauf zwischen dem Spurpunkt und dem Radaufstandspunkt der entsprechenden Rolle auf. Dabei ist die Bohrung in der gewünschten Fahrtrichtung vor dem Mittelpunkt der Rollenachse angeordnet und/oder derart schräg geneigt, dass der Durchstoßpunkt der Achse des Bolzens durch die Bewegungsebene vor dem Radaufstandspunkt liegt, sodass ein positiver Nachlauf entsteht. Dieser Nachlauf wirkt, wie beispielsweise von den Rädern von Einkaufswägen bekannt, bei einem Lenkausschlag durch das auftretende Drehmoment rückstellend auf die Stellung des Rades. Umgekehrt tritt als Konsequenz des oben beschriebenen Spurfehlers ein Drehmoment bei der Kurvenfahrt auf, welches die mit dem Nachlauf ausgestattete Rolle automatisch in Fahrtrichtung ausrichtet.

Gemäß der vorliegenden Erfindung ist die Rolle jedoch nicht mit der bei Einkaufswagen üblichen äußeren Konstruktion der Lenkungsdrehachse ausgestattet, sondern mit einem integrierten Nachlauf. Hierunter ist hier und im Folgenden zu verstehen, dass an dem oben beschriebenen Bolzen ein Pendelring gelagert ist, der ein außenliegendes Wälz- oder Gleitlager aufweist. Der Pendelring ist dabei derart ausgebildet, dass er innerhalb eines vorgegebenen Winkelbereichs um die Geradeausstellung pendeln kann, sodass die Rolle innerhalb dieses Winkelbereichs der Ausrichtung der Führungsschiene bzw. Kurve folgen kann. Hierzu ist auch der Pendelring außermittig und/oder schräg an dem Bolzen gelagert. Da der Pendelring erfindungsgemäß ein außenliegendes Wälz- oder Gleitlager aufweist, ist für den erfindungsgemäßen Nachlauf der Lenkungsdrehachse keine externe Lagerung der Lenkungsdrehachse erforderlich. Vielmehr kann unmittelbar auf dem Wälz- bzw. Gleitlager ein Außenring, mit dem die Rolle auf der Führungsschiene bzw. Fahrbahn aufsteht bzw. gelagert ist, abrollen bzw. gleiten. Durch die Verschwenkbarkeit des Pendelrings bezüglich der starren Rollenachse kann somit die momentane Rotationsachse, um die der Außenring auf dem Wälz- oder Gleitlager abrollt bzw. gleitet, von der starren Rollenachse abweichen. Durch Vorsehen des verschwenkbar und außermittig und/oder schräg gelagerten Pendelrings lässt sich somit ein integrierter Nachlauf realisieren, der die Rolle stets in Fahrtrichtung auszurichten sucht. Die erfindungsgemäße Ausbildung ist somit erheblich kompakter als Lenkungsdrehachsen mit externer Nachlauflagerung und daher besonders geeignet für den Einsatz mit Läufern für Langstator-Linearmotorsysteme.

Die vorliegende Erfindung stellt Läufer für ein Langstator-Linearmotorsystem zur Verfügung, wie es im Stand der Technik hinlänglich bekannt ist. Wie weiter unten beschrieben können die erfindungsgemäßen Läufer jeweils ein Sekundärteil zur Wechselwirkung mit dem oder den Linearmotorsträngen des Langstator-Linearmotors aufweisen. Hierzu ist das Sekundärteil je nach Weiterbildung mit mindestens einem Permanentmagnet bzw. nicht schaltenden Elektromagnet oder mindestens einem Elektromagnet ausgestattet.

Weiterhin weist der Läufer wenigstens zwei Rollen zur Lagerung des Läufers an parallelen Führungsschienen des Langstator-Linearmotorsystems auf. Dabei ist es unerheblich, wie die Rollen bzw. deren Laufflächen im Detail ausgebildet sind. Die Rollen können mit einer ebenen Lauffläche oder ballig ausgebildet sein. Auch ist ein konkaves Abrollprofil der Rollen möglich. Die Ausbildung der Lauffläche der Rollen kann jeweils in Abhängigkeit von der Ausbildung der Führungsschienen gewählt werden. Eine vorteilhafte Ausbildung ergibt sich, wenn die Oberfläche der Führungsschienen ein gekrümmtes Profil aufweist, welches einem konkaven Abrollprofil der Rollen schlüssig entspricht. Auf diese Weise können die Rollen einerseits sicher entlang der Führungsschiene geführt werden. Andererseits wirkt aufgrund des Formschlusses zwischen dem Abrollprofil und dem Schienenprofil bei der Kurvenfahrt ein Drehmoment auf die Rollen, das sich auf die Winkelstellung des Drehschemels überträgt, sodass die parallelen Komponenten der Rotationsachsen, d.h. die Projektionsachsen, stets zum Mittelpunkt der jeweiligen Kurve ausgerichtet werden.

Wie zuvor erwähnt kann der Läufer neben den die Schwerkraft aufnehmenden Tragrollen auch Führungsrollen aufweisen. Die vorliegende Erfindung stellt eine automatische Lenkung der Tragrollen, sowie allgemein der Laufrollen, zur Verfügung, welche den Verschleiß durch Abrieb erheblich reduziert. Gemäß einer Weiterbildung der ersten Alternative der Erfindung können hierzu jeweils zwei sich entsprechende Rollen, von denen eine an einer ersten Führungsschiene und die andere an einer zweiten Führungsschiene gelagert ist, wobei die erste und zweite Führungsschiene die Bewegungsebene aufspannen, zu einem Rollenpaar zusammengefasst werden, das gemeinsam mit seinen Rollenachsen an einem Drehschemel gelagert ist. Drehschemel sind im Bereich der Schwenkachslenkung hinreichend bekannt und werden daher hier nicht im Detail beschrieben. Entscheidend ist lediglich, dass die oben erwähnten einzelnen Rollen bzw. die beiden Rollen eines Rollenpaares, d. h. ihre Rotationsachsen, über eine Drehung des Drehschemels verschwenkt werden. Insbesondere wenn die Projektionsachsen der beiden Rollen eines Rollenpaares zusammenfallen, bewirkt eine Ausrichtung des Drehschemels in Richtung des Kurvenradius automatisch, dass die Projektionsachsen beider Rollen zum Mittelpunkt der Kurve zeigen und somit das Ackermann-Prinzip erfüllen.

Gemäß einer Weiterbildung dieser Alternative kann der Läufer weiterhin wenigstens ein senkrecht zur Fahrtrichtung verschiebbares oder in der Führungsebene verschwenkbares Führungselement aufweisen, das dazu ausgebildet ist, in Eingriff mit dem Langstator-Linearmotorsystem, insbesondere mit einer Führungsschiene oder einer Steuerkurve, einen konstanten Abstand von der Führungsschiene oder der Steuerkurve zu wahren, wobei der wenigstens eine Drehschemel derart mit dem Führungselement verbunden ist, dass eine Verschiebung des Führungselements senkrecht zur Fahrtrichtung oder eine Verschwenkung des Führungselements in der Führungsebene eine Änderung der Drehstellung des Drehschemels bewirkt. Hierbei kann für jeden Drehschemel ein separates Führungselement, insbesondere ein separates verschwenkbares Führungselement, vorgesehen sein, oder aber, wie unten genauer beschrieben, für zwei entlang der Fahrtrichtung voneinander beabstandete Drehschemel ein gemeinsames Führungselement vorgesehen werden.

Je nach Ausbildung des Abrollprofils der Rollen sowie der Führungsschienen kann es vorteilhaft sein, die Drehstellung des oder der Drehschemel aktiv zu beeinflussen. Dies gelingt gemäß der vorliegenden Weiterbildung durch Vorsehen eines verschiebbaren oder verschwenkbaren Führungselements, welches in mechanischem oder magnetischem Eingriff mit dem Langstator-Linearmotorsystem einen konstanten Abstand von der Führungsschiene wahrt. Beispielsweise kann das Führungselement als Führungsrolle ausgebildet sein, welche auf einer Führungsschiene oder einer Steuerkurve abrollt. Ebenso ist ein Gleitschuh denkbar, der auf einer Führungsschiene oder einer Steuerkurve gleitet. Auch ein Führungsstift, der entlang der Führungsschiene oder einer entlang der Transportbahn ausgebildeten Vertiefung, beispielsweise einer Steuerkurve, geführt wird, kann als Führungselement verwendet werden. Schließlich ist auch ein Permanentmagnet als Führungselement denkbar, der aufgrund der magnetischen Wechselwirkung mit der Führungsschiene einen festen Abstand innerhalb gewisser Toleranzen zu der Führungsschiene einhält.

Das Führungselement kann senkrecht zur Fahrtrichtung verschiebbar ausgebildet sein und kann insbesondere mittig bezüglich einer Längsausdehnung des Läufers angeordnet sein. Beim Übergang von der Geradeausfahrt zur Kurvenfahrt kommt es dann aufgrund der endlichen Längsausdehnung des Läufers zu einer senkrechten Verschiebung des Führungselements, welche sich, da das Führungselement mit dem Drehschemel verbunden ist, auch auf die Drehstellung des Drehschemels überträgt. Auf diese Weise wird ohne aktiven Antrieb, lediglich durch den Eingriff des Führungselements mit dem Langstator-Linearmotorsystem, automatisch eine Anpassung der Drehstellung des Drehschemels an den Kurvenradius der gerade durchfahrenen Kurve erzielt. Dabei ist es unerheblich, ob das Führungselement an der kurveninneren Führungsschiene, an der kurvenäußeren Führungsschiene oder an einem innerhalb oder außerhalb der Führungsschienen vorgesehenen Führungsband oder Führungskanal oder einer Steuerkurve geführt wird. Lediglich die Konstanz des Abstandes des Führungselements von einer beliebigen Führungsschiene ist wesentlich.

Alternativ kann das Führungselement in der Führungsebene verschwenkbar ausgebildet sein. Beispielsweise kann das Führungselement als exzentrisch gelagerte Rolle ausgebildet sein, die mit einer Führungsschiene in Eingriff steht. Durch geeignete Vorspannung, beispielsweise mittels einer Spiralfeder, kann die Rolle stets derart ausgerichtet sein, dass sie in Kontakt mit der Führungsschiene steht. Beim Übergang in die Kurvenfahrt bzw. bei Änderung des Kurvenradius ändert sich automatisch die Drehstellung des Führungselements, wobei die Änderung direkt oder über ein verschiebbares Element auf die Drehschemel übertragen werden kann.

Gemäß einer weiteren Alternative können eine oder mehrere unmittelbar am Drehschemel gelagerte Führungsrollen als verschwenkbares Führungselement dienen. Hierzu wird bzw. werden die Führungsrollen in Fahrtrichtung bzw. entgegen der Fahrtrichtung versetzt zur Rotationsachse des Drehschemels angeordnet. Beim Übergang in die Kurvenfahrt bzw. bei Änderung des Kurvenradius führt dieser Versatz dazu, dass sich die Drehstellung des Drehschemels automatisch ändert. Besonders vorteilhaft ist diese Weiterbildung, wenn die zu lenkenden Laufrollen bzgl. der Fahrtrichtung zentriert zur Rotationsachse des Drehschemels angeordnet sind.

Eine Vielzahl alternativer Weiterbildungen ist denkbar, bei denen das Wahren eines konstanten Abstandes des Führungselements zu einer Führungsschiene bzw. einer Steuerkurve eine Änderung der Drehstellung des oder der Drehschemel des Läufers bewirkt, wenn sich der Kurvenradius ändert.

Gemäß einer speziellen Weiterbildung kann der wenigstens eine Drehschemel mit dem Führungselement über wenigstens ein Verbindungselement verbunden sein, wobei das Verbindungselement derart ausgebildet ist, dass eine Verschiebung des Führungselements bei Kurvenfahrt zum Kurvenäußeren hin eine Ausrichtung der Drehschemel in Richtung Kurvenradius bewirkt. Gemäß dieser Weiterbildung übt das Führungselement somit bei einer Verschiebung senkrecht zur Fahrtrichtung bzw. senkrecht zu einer Längsachse des Läufers eine Kraft auf das wenigstens eine Verbindungselement aus, welche durch das Verbindungselement derart auf den Drehschemel übertragen wird, dass ein Drehmoment entsteht, welches den Drehschemel in Richtung des Kurvenradius ausrichtet. Genauer gesagt werden wie oben beschrieben die Projektionsachsen der an dem Drehschemel gelagerten Rollen in Richtung des Kurvenmittelpunkts ausgerichtet. Eine Vielzahl von Verbindungselementen starrer, flexibler oder elastischer Art ist hierbei vorstellbar.

Beispielsweise kann das wenigstens eine Verbindungselement eine zwei Drehschemel miteinander verbindende elastische Schiene oder Stange umfassen, die derart in Eingriff mit dem Führungselement steht oder mit diesem verbunden ist, dass eine Verschiebung des Führungselements eine elastische Verformung der Schiene oder Stange bewirkt. Die Verbindung der Drehschemel mit dem Führungselement muss gemäß der oben beschriebenen speziellen Weiterbildung nicht kraftschlüssig oder fest sein, sondern kann auch formschlüssig oder durch mechanischen Kontakt ohne mechanische Verbindung erfolgen. Gemäß des vorliegenden Beispiels können zwei Drehschemel miteinander über eine elastische Schiene oder Stange verbunden sein, die derart an dem Drehschemel angreift, dass die durch die Verschiebung des Führungselements auf die Schiene oder Stange wirkende Verformungskraft ein Drehmoment auf die Drehschemel ausübt, das seinerseits die Drehschemel wie oben beschrieben in Richtung des Kurvenradius ausrichtet. Dabei kann das Führungselement fest mit der elastischen Schiene oder Stange verbunden sein oder lediglich in mechanischen Kontakt mit der elastischen Schiene oder Stange gebracht werden. Die elastische Schiene oder Stange kann beispielsweise im 3D-Druckverfahren aus einem elastischen Kunststoff hergestellt werden.

Gemäß einer alternativen Weiterbildung kann das Verbindungselement einen zwei Drehschemel jeweils formschlüssig, insbesondere über eine Nut, miteinander verbindenden starren Schieber umfassen, der derart in Eingriff mit dem Führungselement steht oder mit diesem verbunden ist, dass eine Verschiebung des Führungselements eine Verschiebung des Schiebers senkrecht zur Fahrtrichtung bewirkt. Der starre Schieber kann insbesondere mittig und verschiebbar an dem Läufer befestigt sein, wobei das Führungselement, beispielsweise eine Führungsrolle bzw. Steuerrolle, an dem Schieber selbst gelagert ist. Die beiden Drehschemel sind dabei formschlüssig mit dem starren Schieber verbunden, beispielsweise indem seitliche Arme des Schiebers vorgesehen sind, die formschlüssig in eine Nut des jeweiligen Drehschemels eingreifen. Somit können sich die Drehschemel relativ zu dem starren Schieber drehen, wobei auch eine Verbindung über ein Drehgelenk denkbar ist. Wie bereits bei der oben erwähnten elastischen Schiene oder Stange wirkt der starre Schieber somit als Übertragungselement, welches eine translatorische Bewegung des Führungselements in ein Drehmoment und damit eine Rotationsbewegung des oder der Drehschemel umsetzt.

Zwischen dem starren Schieber und den Drehschemeln kann zudem eine Übersetzung vorgesehen sein. Bei Wahl des richtigen Übersetzungsverhältnisses können die an den Drehschemeln gelagerten Rollen ohne Spurfehler auf den Führungsschienen abrollen. Dies ist auch in einem Übergangsbereich von einem geraden Stück zu einem Kurvenstück, zum Beispiel in Form einer Klothoide, möglich. Je kleiner der Radius der Führungsschiene ist, zu der das Führungselement einen konstanten Abstand wahrt, desto stärker wird der Schieber senkrecht zum Läufer verschoben und desto stärker werden die Drehschemel ausgelenkt. Bei Wahl des richtigen Übersetzungsverhältnisses können die Rollen somit an jedem Punkt der Klothoide die korrekte Ausrichtung, d.h. zum Kurvenmittelpunkt hin, haben. Wie oben erwähnt kann der Abstand, beispielsweise bei Gleiten oder Abrollen des Führungselements auf einer Führungsschiene, insbesondere Null sein.

Die Ausrichtung der Drehschemel durch Verschiebung des Schiebers kann beispielsweise dadurch beeinflusst werden, dass eine relative Lage der formschlüssigen Verbindung zwischen Drehschemel und einem Mittelpunkt des Schiebers derart gewählt wird, dass eine die Rollen eines Rollenpaares verbindende virtuelle Achse in Richtung des Kurvenradius einer Kurve mit vorgegebener Krümmung ausgerichtet wird. Anders ausgedrückt wird die formschlüssige Verbindung zwischen Drehschemel und Schieber, beispielsweise durch entsprechend lange Ausbildung des entsprechenden Arms des Schiebers, derart zwischen Drehschemel und Schieber angeordnet, dass die durch den Kurvenradius mit vorgegebener Krümmung verursachte senkrechte Verschiebung des Schiebers die gewünschte Änderung der Drehstellung der Drehschemel bewirkt. So ist der Einfluss auf die Drehstellung der Drehschemel umso größer, je näher die formschlüssige Verbindung am Drehschemel angeordnet ist. Die hier erwähnte, die Rollen des Rollenpaares verbindende virtuelle Achse entspricht der zuvor erwähnten Ausrichtung der Projektionsachsen der Rollen.

Durch die Ausbildung der Läufer mit lenkbaren Drehschemeln kann der Rollenverschleiß erheblich reduziert werden. Durch Vorsehen eines Führungselements können die Laufrollen, auch bei ebenem oder konvexem Abrollprofil, zu jedem Zeitpunkt richtig geführt werden. Hierzu ist weder eine externe Energiequelle noch eine Steuervorrichtung erforderlich. Die beschriebenen Weiterbildungen erlauben somit auf einfache und wartungsfreie Weise eine Lenkung von Laufrollen ohne Spurfehler.

Gemäß der vorliegenden Erfindung, unabhängig davon, ob Lenkungsdrehachsen mit integriertem Nachlauf mit oder ohne Drehschemel vorgesehen sind, können die Rollen, d.h. die Laufrollen, des Läufers mit einem konkaven Abrollprofil ausgebildet sein, welches derart gestaltet ist, dass die Rollen auf einer Oberfläche der Führungsschienen seitenstabil abrollen. Das konkave Abrollprofil kann beispielsweise an ein konvexes Oberflächenprofil der Führungsschienen angepasst sein. In diesem Fall bewirkt die seitenstabile Führung der Laufrollen an den Führungsschienen, dass die gelenkten Rollen durch Anpassung der Drehstellung des Drehschemels und/oder aufgrund des Nachlaufs, automatisch in Fahrtrichtung ausgerichtet werden.

Wie oben erwähnt wird die technische Aufgabe durch Vorsehen wenigstens einer Rolle mit einer Rollenachse mit integriertem Nachlauf gelöst. Die wenigstens eine derart gelenkte Rolle ist dabei insbesondere eine Laufrolle, d.h. die Rollenachse der wenigstens einen Rolle ist parallel oder schräg zu der Bewegungsebene des Läufers angeordnet. Da auf reinen Führungsrollen kein Anteil der Schwerkraft lastet, ist eine Ausbildung der Führungsrollen mit integriertem Nachlauf im Allgemeinen nicht erforderlich. Eine Rolle, deren Rollenachse jedoch zumindest eine parallele Komponente zur Bewegungsebene aufweist, trägt zumindest einen Teil der Gewichtskraft des Läufers. Aufgrund des Nachlaufs entsteht somit ein Drehmoment auf die Lagerung der Rolle, welches die Rolle automatisch in Fahrtrichtung ausrichtet.

Wie bereits erwähnt wird der integrierte Nachlauf gemäß dieser Weiterbildung durch Lagerung der Rolle mittels eines Bolzens über eine asymmetrische und/oder schräge Bohrung an einer Rollenachse und Vorsehen eines an dem Bolzen gelagerten Pendelrings mit außenliegendem Wälz- oder Gleitlager erzielt. Die außermittige und/oder schräge Bohrung durch die Rollenachse, ob starr oder wie oben beschrieben an einem Drehschemel gelagert, zusammen mit der außermittigen und/oder schrägen Lagerung des Pendelrings an dem Bolzen durch die Bohrung erzeugt einen integrierten Nachlauf der Lenkungsdrehachse, sodass die Rolle einzeln lenkbar ist. Das aus dem Nachlauf resultierende Drehmoment bei der Kurvenfahrt richtet die Rolle automatisch in Fahrtrichtung aus, selbst wenn die Rolle nicht mit einem seitenstabilen Abrollprofil ausgebildet ist. Auf diese Weise lässt sich das Radieren der Rolle im Kurvenbereich vermeiden, wodurch sich die Lebensdauer der Rolle erhöht. Die Ausbildung mit einem integrierten Nachlauf ist dabei erheblich kompakter als die Ausbildung mit einer äußeren Lenkungsdrehachse, wodurch die so ausgebildeten Rollen besser für Läufer für Langstator-Linearmotorsysteme eingesetzt werden können. Des Weiteren begrenzt der integrierte Nachlauf über den Pendelring den maximalen Lenkausschlag, sodass das bei äußeren Lenkungsdrehachsen von Einkaufswägen bekannte Querstellen oder Umschlagen in eine andere Richtung vermieden wird.

Wie erwähnt kann die wenigstens eine Rolle weiterhin einen an dem Wälz- oder Gleitlager gelagerten Außenring umfassen. Der Außenring gleitet oder rollt somit auf dem Wälz- oder Gleitlager ab, sodass die Rotationsachse der Rolle, welche durch die Rotation des Außenrings gegeben ist, von der Rollenachse abweichen kann. Die Rotationsachse wird dabei durch die Stellung des Pendelrings bestimmt.

Gemäß einer Weiterbildung kann der Bolzen mit der Rollenachse drehfest verbunden sein, wobei der Pendelring an dem Bolzen drehbar gelagert ist. Anders ausgedrückt ist die Stellung des Bolzens bezüglich der Rollenachse unveränderlich, während der Pendelring um den Bolzen pendeln kann.

Alternativ kann der Pendelring mit dem Bolzen drehfest verbunden sein, während der Bolzen drehbar an der Rollenachse gelagert ist. Anders ausgedrückt ist in diesem Fall die Stellung des Pendelrings bezüglich des Bolzens unveränderlich, während der Bolzen in der Bohrung durch die Rollenachse drehbar ist.

Um die Verschwenkbarkeit des Pendelrings um die Lenkungsdrehachse zu ermöglichen, kann ein Innendurchmesser des Pendelrings größer als ein Durchmesser der Rollenachse ausgebildet sein, sodass zwischen Rollenachse und Pendelring ein Ringspalt gebildet wird. Dabei ist der Innendurchmesser des Pendelrings um einen von der maximalen Winkelverstellbarkeit abhängigen Betrag größer als der Durchmesser der Rollenachse, sodass der Pendelring um die Rollenachse innerhalb des gewünschten Winkelbereichs pendeln kann. Alternativ oder ergänzend kann der Pendelring innenseitig Aussparungen aufweisen, die ein Pendeln um die Rollenachse ermöglichen. Die Aussparungen können dabei in Fahrtrichtung und entgegen der Fahrtrichtung an der Innenseite des Pendelrings vorgesehen sein. In diesem Fall kann der Pendelring abseits dieser Aussparungen mit minimalem Abstand von der Rollenachse angeordnet sein. Erneut können die Aussparungen derart dimensioniert werden, dass eine Verschwenkbarkeit des Pendelrings um einen gewünschten Winkelbereich gegeben ist. Wie oben erwähnt verhindert der Anschlag des Pendelrings an die Rollenachse, dass sich die Rolle quer stellt oder umschlägt. Der Winkelbereich, also die Beabstandung des Pendelrings von der Rollenachse und/oder die Dimensionierung der Aussparungen, können dabei entsprechend der zu durchfahrenden Kurvenradien gewählt werden.

Der Pendelring kann beispielsweise mittels eines oder mehrerer Distanzelemente, durch Ausbildung des Bolzens als abgesetzter Bolzen und/oder durch Presspassung oder Klebung an dem Bolzen von der Rollenachse beabstandet sein. Ein abgesetzter Bolzen weist wie bekannt verschiedene Abschnitte auf, wobei der Durchmesser eines Abschnitts für die Aufnahme des Bolzens im Pendelring kleiner oder mit anderem Querschnitt ausgebildet sein kann.

Bewegt sich der Läufer auf einem geraden Stück der Transportbahn bzw. Führungsschiene, so folgen die Laufrollen in ihrer Grundstellung genau der Fahrtrichtung. Fährt der Läufer nun von der Geraden in ein Kurvenstück ein, so folgen die Laufrollen aufgrund des Rückstellmoments geometrisch richtig der Transportbahn bzw. Führungsschiene. Genauso richten sich die Rollen wieder gerade aus, wenn der Läufer von der Kurvenfahrt wieder auf eine gerade Teilstrecke läuft.

Die Ausbildung einzelner oder aller Laufrollen des Läufers mit Lenkungsdrehachsen mit integriertem Nachlauf kann mit der oben beschriebenen Drehschemellenkung wirkungsvoll kombiniert werden. Tritt beispielsweise aufgrund unzureichender Verformung des elastischen Verbindungselements oder unzureichender Verschiebung des starren Schiebers ein Restspurfehler der betroffenen Rollen auf, so kann der integrierte Nachlauf dieser Rollen eine korrekte Ausrichtung der Rollen bewirken. Dabei reicht es in der kombinierten Ausbildung aus, den integrierten Nachlauf mit einem geringen Winkelbereich der Pendelbewegung auszubilden. Umgekehrt ermöglicht die kombinierte Ausbildung den Einsatz des erfindungsgemäßen Läufers auf Kurvenstücken mit stark variierenden Kurvenradien.

Die vorliegende Erfindung stellt auch ein Langstator-Linearmotorsystem mit einer Vielzahl von Läufern nach einer der oben beschriebenen Weiterbildungen zur Verfügung, welches weiterhin eine Transportbahn mit wenigstens zwei parallelen Führungsschienen umfasst, an denen die Läufer beweglich gelagert sind, wobei je eine Rolle eines Rollenpaares der Läufer an einer der zwei Führungsschienen und die andere Rolle des Rollenpaares an der anderen der zwei Führungsschienen gelagert ist, und wobei die Transportbahn wenigstens ein gerades Stück und wenigstens ein Kurvenstück und/oder Kurvenstücke mit verschiedenen Kurvenradien umfasst.

Die Transportbahn ist gemäß dieser Weiterbildung somit als Doppelschienensystem ausgebildet, wobei zusätzliche Führungsschienen zur weiteren Stabilisierung der Läufer und/oder für die oben beschriebenen Führungselemente vorgesehen sein können. Die parallel geführten Doppelschienen spannen dabei die oben beschriebene Bewegungsebene auf, da die von den Führungsschienen beschriebenen Kurven in dieser Ebene liegen.

Die oben beschriebenen Drehschemel der Läufer verbinden somit zwei Rollen, von denen je eine an jeder der beiden Führungsschienen gelagert ist. Eine Änderung der Drehstellung der Drehschemel bewirkt somit das Ausrichten der Projektionsachsen dieser Rollen zum Kurvenmittelpunkt hin.

Langstator-Linearmotorsysteme sind im Stand der Technik hinlänglich bekannt, sodass hier auf eine detaillierte Beschreibung verzichtet wird. Es sei lediglich erwähnt, dass die Langstator-Linearmotorsysteme mit einem oder zwei Linearmotorsträngen entlang der Transportbahn ausgebildet sein können. Dabei können die Linearmotorstränge als Langstatoren von, insbesondere synchronen, Linearmotoren ausgebildet sein. In einer alternativen Ausführung können die Linearmotorstränge auch als asynchrone Linearmotoren ausgebildet sein, wobei der mindestens eine Permanentmagnet und/oder nicht schaltende Elektromagnet des Sekundärteils der Läufer und/oder ein elektrisch leitendes Element der Läufer, zum Beispiel in Form einer metallischen Platte, an der der Permanentmagnet und/oder nicht schaltende Elektromagnet angebracht sind, als Leiter für die Induktion durch die asynchrone Linearmotoren fungieren.

Aufgrund der magnetischen Wechselwirkung zwischen den Magneten der Sekundärteile und den Langstatoren können die Läufer mit einem individuellen Weg-Zeit-Profil entlang der Transportbahn, d.h. entlang der Führungsschienen, bewegt werden. Die Steuerung der Läufer kann dabei durch gezieltes Ansteuern der Magnete der Läufer und/oder der Linearmotoren mittels einer geeigneten Steuereinrichtung erfolgen.

Bei Ausbildung der Läufer als passive Läufer, d.h. mit einem Sekundärteil mit einem oder mehreren Permanentmagneten bzw. nicht schaltenden Elektromagneten, werden die Läufer durch Wechselwirkung mit den von einzelnen ansteuerbaren Elektromagneten der Linearmotorstränge erzeugten elektromagnetischen Wechselfeldern bewegt. Alternativ können die Läufer als aktive Läufer mit elektrischen Wicklungen versehen werden, welche die für den Antrieb notwendigen magnetischen Wechselfelder aufbringen können. Entsprechend wird ein Abschnitt der Transportbahn mit Permanentmagneten bzw. nicht schaltende Elektromagneten versehen. Hierbei können sowohl die für den Antrieb nötige elektrische Energie als auch für die Steuerung nötige Signale via Induktionsübertragung auf die einzelnen Läufer übertragen werden.

Die Läufer können insbesondere als Transportelemente zum Transportieren von Stückgut, beispielsweise von Behältern, ausgebildet sein. Hierzu können die Läufer wie in Figur 1 gezeigt mit einer geeigneten Halteeinrichtung, zum Beispiel in Form eines Greifelements, ausgestattet sein. Das Greifelement kann dabei passiv oder aktiv steuerbar ausgebildet sein. Insbesondere sind Greifelemente zum formschlüssigen oder kraftschlüssigen Greifen eines Halsbereichs von Behältern, zum Beispiel beim sogenannten Neckhandling von Kunststoffflaschen, vorstellbar, wobei der gehaltene Behälter beim formschlüssigen Greifen um seine Längsachse in dem Greifelement drehbar gelagert sein kann. Zudem kann das Greifelement schwenkbar und/oder höhenverstellbar ausgebildet sein und über, unter oder neben dem Läufer angeordnet sein.

Behälter sind insbesondere Getränkeflaschen, aber auch andere Behälter für Lebensmittel, Medikamente, Hygieneartikel, Reinigungsmittel oder dergleichen, wie zum Beispiel Dosen, Glasflaschen oder andere Glasbehälter mit Deckel, Verpackungen auf der Basis von Karton oder Verbundstoffen, Tetrapak, oder ähnliches. Ebenso sind bei Behältern aus Kunststoff auch Zwischenprodukte, insbesondere Vorformen zum Streckblasen der Behälter umfasst. Des Weiteren sind unter Behältern im Sinne der vorliegenden Offenbarung auch zusammengestellte Gebinde mit mehreren Behältern zu verstehen. Die Langstator-Linearmotorsysteme mit Läufern gemäß der vorliegenden Erfindung lassen sich somit insbesondere in Behälterbehandlungsanlagen einsetzen.

Wie bereits erwähnt weisen die Läufer jeweils wenigstens ein Sekundärteil zur magnetischen Wechselwirkung mit dem wenigstens einen Langstator auf. Hierzu kann wenigstens eine Sequenz, d.h. Abfolge in Längsrichtung des Läufers, von im Allgemeinen benachbarten Permanentmagneten und/oder Elektromagneten, insbesondere nicht schaltenden Elektromagneten, abwechselnder Polung an dem Sekundärteil angebracht sein, welches beispielsweise in Form einer Trägerplatte ausgebildet sein kann. Je nach Ausbildung und Anordnung dieser Magnete, und je nachdem, ob ein einseitiger oder ein beidseitiger Linearmotorantrieb verwendet wird, können die Läufer auch zwei oder mehr Sekundärteile aufweisen. Beispielsweise kann für jeden Langstator ein eigenes Sekundärteil vorgesehen sein. In diesem Fall können die Anordnungen der Sequenzen von Magneten an den Sekundärteilen gleich oder verschieden, insbesondere gespiegelt, sein. Zur Vereinfachung der Darstellung werden hier und im Folgenden ohne Einschränkung Läufer mit genau einem Sekundärteil angenommen. In einem besonderen Fall kann die Sequenz auch nur einen einzigen Magneten einer bestimmten Polung aufweisen.

Der wenigstens eine Langstator der hier beschriebenen Langstator-Linearmotorsysteme kann in einer besonders einfachen Ausführung durch eine Vielzahl entlang des Linearmotorstranges angeordneter elektrischer Wicklungen in Form von einzeln oder blockweise ansteuerbaren Elektromagneten gebildet werden. Hierbei sind auch komplexere Ausführungen, zum Beispiel mittels einer Halbachanordnung der Elektromagnete zur Verstärkung des magnetischen Flusses auf der dem Sekundärteil zugewandten Seite, denkbar.

Die Magnete der wenigstens einen Sequenz können quer zur Transportbahn gerichtet an dem Sekundärteil des Läufers angeordnet sein, sodass je einer der magnetischen Pole jedes Magneten mit einem ersten Langstator wechselwirken kann, während der andere magnetische Pol mit einem zweiten Langstator wechselwirken kann. Alternativ können die dem ersten Langstator und dem zweiten Langstator zugewandten Seiten des Sekundärteils jedoch auch separate Sequenzen von Magneten aufweisen, welche insbesondere in Halbachanordnung zur Verstärkung des magnetischen Flusses in Richtung des jeweiligen Linearmotorstranges ausgebildet sein können. Des Weiteren ist auch eine Ausführung mit lediglich einem Langstator denkbar, wobei die Magnete des Sekundärteils insbesondere in Halbachanordnung angeordnet sein können. Eine Versorgung des mindestens einen nicht schaltenden Elektromagneten des Sekundärteils des Läufers mit der benötigten elektrischen Energie kann über eine entlang der Transportbahn angeordnete elektrische Leitung oder Leistungsversorgungsschiene und über elektrische Kontakte des Läufers, zum Beispiel über Leistungssammelschuhe, erreicht werden. Alternativ ist eine Übertragung der benötigten elektrischen Energie via Induktion denkbar.

Bei Linearmotoren sind die Magnete der Läufer und des oder der Langstatoren im Allgemeinen derart ausgerichtet und dimensioniert, dass sie sich zu beiden Seiten eines Luftspalts gegenüberstehen, wobei in der Richtung senkrecht zur Transport- bzw. Bewegungsrichtung und entlang des Luftspalts ein möglichst großer Überlapp der sich gegenüberstehenden magnetischen Pole anvisiert wird, um eine optimale Vortriebskraft zu erzielen. Dabei sind zwei Grundkonfigurationen für die Orientierung und relative Anordnung von Führungsschiene(n), Langstator(en) und Sekundärteil denkbar.

In einer ersten Ausführung sind Führungsschiene(n), Langstator(en) und Sekundärteil derart angeordnet, dass der zwischen den Polen der Magnete des Sekundärteils und des Langstators vorhandene Luftspalt im Wesentlichen senkrecht zu einer Aufstandsfläche des Langstator-Linearmotorsystems ausgerichtet ist. In diesem "vertikalen" Fall sind die im Allgemeinen länglich ausgebildeten Pole der Magnete von Langstator und Sekundärteil ebenfalls im Wesentlichen senkrecht ausgerichtet. Gleiches gilt für eine Trägerplatte des Sekundärteils. Die Bewegungsrichtung und der Verlauf der wenigstens einen Führungsschiene ist hierbei im Wesentlichen horizontal, d.h. parallel zu der Aufstandsfläche angenommen. Somit ist auch die von den Führungsschienen aufgespannte Bewegungsebene horizontal. Bei einem beidseitigen Linearmotor verlaufen zudem die beiden Langstatoren parallel zueinander in einer horizontalen Ebene.

In einer zweiten, alternativen Ausführung sind die Führungsschiene(n), Langstator(en) und Sekundärteile derart angeordnet, dass der zwischen den Polen der Magnete des Sekundärteils und des Langstators vorhandene Luftspalt im Wesentlichen parallel zu der Aufstandsfläche des Langstator-Linearmotorsystems ausgerichtet ist. In diesem "horizontalen" Fall sind die im Allgemeinen länglich ausgebildeten Pole der Magnete von Langstator und Sekundärteil ebenfalls im Wesentlichen horizontal ausgerichtet. Gleiches gilt für eine Trägerplatte des Sekundärteils. Die Bewegungsrichtung und der Verlauf der wenigstens einen Führungsschiene ist hierbei ebenfalls im Wesentlichen horizontal, d.h. parallel zur Aufstandsfläche angenommen. Bei einem beidseitigen Linearmotor verlaufen jedoch nunmehr die beiden Langstatoren parallel zueinander in einer vertikalen Ebene.

In beiden Ausführungen verläuft die Bewegung der Läufer in einer horizontalen Ebene, der Bewegungsebene bzw. Führungsebene. Es versteht sich jedoch, dass die oben genannte Transportbahn auch Steigungen, ja sogar vertikale Teilstücke, umfassen kann. Entsprechend sind die relativen Anordnungen von Führungsschienen, Langstatoren und Sekundärteilen an die Ausrichtung der Transportbahn anzupassen. Der Einfachheit der Beschreibung halber wird hier und im Folgenden ohne Einschränkung eine horizontal ausgerichtete Transportbahn angenommen. Es versteht sich jedoch, dass die nachfolgend verwendeten Begriffe "senkrecht", "vertikal", "parallel" und "horizontal" kein absolutes Bezugssystem definieren, sondern in Bezug auf die Ausrichtung der Transportbahn zu verstehen sind, soweit nicht explizit etwas Anderes angegeben ist.

Im Stand der Technik wird üblicherweise eine möglichst große Überlappung der sich gegenüberstehenden Pole senkrecht zur Fahrtrichtung, d.h. parallel zur Flächenausdehnung des Luftspalts und senkrecht zur Fahrtrichtung, vorgesehen, um die magnetische Wechselwirkung zu maximieren.

Insbesondere bei der oben beschriebenen horizontalen Ausführung mit horizontalem Luftspalt tragen die Rollen die Gewichtskraft des Läufers und, bei einseitigem, unterseitig angeordnetem Langstator, die Normalkraft, die der Langstator auf das Sekundärteil ausübt. Bei der vertikalen Ausführung mit vertikalem Luftspalt wirkt lediglich die Gewichtskraft des Läufers auf die Tragrollen. Diese erfahren dadurch, wie bereits mehrfach erwähnt, einen mechanischen Verschleiß.

Die vorliegende Erfindung stellt auch Läufer zur Verfügung, die in Hinblick auf den mechanischen Verschleiß optimiert sind. Insbesondere können die Läufer mit Sekundärteilen ausgebildet werden, die bezüglich einer Mittelebene des oder der Langstatoren, genauer der Magnete bzw. der Eisenkerne der Elektromagnete der Langstatoren, asymmetrisch angeordnete Magnete aufweisen. Insbesondere können die Magnete der Sekundärteile derart angeordnet sein, dass ihre Ausdehnung unterhalb der Mittelebene größer als ihre Ausdehnung oberhalb der Mittelebene ist. Dabei ist die Mittelebene der Langstatoren durch die halbe Höhe der Magnete bzw. Eisenkerne der Elektromagnete der Langstatoren definiert.

Indem die Sekundärteile der erfindungsgemäßen Läufer mit Magneten ausgestattet werden, deren größerer Teil unterhalb der Mittelebene angeordnet ist, wirkt auf diese Magneten eine schräg nach oben gerichtete Kraft aufgrund der Wechselwirkung mit den Magneten der Langstatoren, die der Gewichtskraft der Läufer entgegenwirkt. Auf den Tragrollen bzw. ganz allgemein Lagerungselementen, beispielsweise Gleitlagern, der Läufer wirkt somit eine um die Senkrechtkomponente der magnetischen Wechselwirkungskraft reduzierte Gewichtskraft. Aufgrund der reduzierten Gewichtskraft wird gleichzeitig der Verschleiß der Lagerungselemente, insbesondere der Tragrollen reduziert.

Gemäß einer Weiterbildung können die Magnete der Sekundärteile der Läufer in vertikaler Richtung, d.h. senkrecht zur Fahrtrichtung und parallel zum Luftspalt, mit einer Ausdehnung, d. h. Höhe, ausgebildet sein, die größer oder gleich der Ausdehnung der Magnete bzw. Eisenkerne der Elektromagnete des oder der Langstatoren in vertikaler Richtung ist. Die asymmetrische Anordnung der Magnete der Sekundärteile mit einem Schwerpunkt, der unterhalb der Mittelebene der Langstatoren liegt, führt dann wie oben beschrieben zu einer magnetischen Wechselwirkungskraft, die schräg nach oben gerichtet ist.

Während bei gleichgroßen Magneten der Sekundärteile und der Langstatoren in vertikaler Richtung eine Verschiebung der Magnete der Sekundärteile nach unten bewirkt, dass die Vortriebskraft aufgrund der reduzierten Überlappung mit den Magneten der Langstatoren ebenfalls reduziert wird, kann bei Verwendung von "übergroßen" Magneten der Sekundärteile, d.h. Magneten, deren vertikale Ausdehnung größer als die vertikale Ausdehnung der Magnete bzw. Eisenkerne der Langstatoren ist, ohne Reduzierung der Vortriebskraft die gewünschte Schrägstellung der magnetischen Wechselwirkungskraft und damit Reduzierung der wirkenden Gewichtskraft erzielt werden.

Die Magnete der Sekundärteile bzw. die Sekundärteile selbst können fest mit den Läufern verbunden sein. Alternativ können die Magnete bzw. die Sekundärteile über ein federelastisches Element mit den Läufern verbunden sein, wobei zusätzlich eine Halteeinrichtung, beispielsweise ein Greifelement für Behälter, der Läufer zusammen mit den Magneten bzw. den Sekundärteilen an dem federelastischen Element befestigt ist. Eine Änderung der Traglast des Läufers, beispielsweise bei Befüllung des getragenen Behälters, wirkt sich über eine Vergrößerung der Ausdehnung des federelastischen Elements somit automatisch auf die vertikale Positionierung der Magnete des Sekundärteils relativ zu den Magneten des Langstators aus. Anders ausgedrückt verschiebt eine Erhöhung der Traglast die Magnete des Sekundärteils nach unten. Dem wirkt die oben beschriebene Vertikalkomponente der magnetischen Wechselwirkungskraft entgegen, und zwar umso stärker, je weiter die Magnete des Sekundärteils nach unten verschoben sind (solange ein ausreichender Überlapp besteht). Bei Verwendung eines federelastischen Elements zur Befestigung des Sekundärteils und der Halteeinrichtung am Läufer nimmt die oben beschriebene Reduzierung der Gewichtskraft somit mit Erhöhung der Traglast zu, was der aufgrund der erhöhten Traglast erhöhten Gewichtskraft entgegenwirkt. Um Schwingungen zu vermeiden, kann das federelastische Element gedämpft ausgebildet sein.

Die beschriebenen Weiterbildungen mit asymmetrisch ausgebildeten und/oder angeordneten Magneten der Sekundärteile reduzieren die auf die Tragrollen bzw. Lagerungselemente wirkenden Kräfte aufgrund des Gewichts der Läufer bzw. der beförderten Last und reduzieren somit den mechanischen Verschleiß der Tragrollen bzw. Lagerungselemente.

Der beschriebene Effekt kann auch bei der horizontalen Ausbildung mit einem horizontalen Luftspalt verwendet werden, indem bei dieser Ausbildung bevorzugt auf einer Seite auftretende Seitenkräfte, beispielsweise Fliehkräfte, durch asymmetrische Anordnung der Magnete der Sekundärteile in der Art, dass der größere Teil der Magnete auf der dieser Seite gegenüberliegenden Seite angeordnet ist, teilweise kompensiert werden.

Wie bereits mehrfach angedeutet kann die asymmetrische Anordnung der Magnete der Sekundärteile auch bei Läufern zum Einsatz kommen, die nicht über Rollen gelagert sind, sondern über alternative Lagerungselemente, insbesondere Gleitlager, an den Führungsschienen gelagert sind.

Transportsysteme auf Basis von Langstator-Linearmotorsystemen sind im Stand der Technik wohl bekannt. Bei solchen Transportsystemen werden im Allgemeinen eine Vielzahl von einzeln bewegbaren Läufern zumindest teilweise mechanisch an einer oder mehreren Führungsschienen gelagert. Durch Reibungsvorgänge aufgrund der Relativbewegung zwischen Läufern und Führungsschienen kann die Reibungselektrizität zu einer beträchtlichen elektrostatischen Aufladung der Läufer führen, welche bei unkontrollierter Entladung Personen oder Bauteile schädigen kann. Bekannt sind Verfahren zum Ableiten elektrostatischer Ladungen von einem bewegten Läufer zu stationären, geerdeten Bauteilen per elektrischer Kontakteinrichtung. Als elektrische Kontakteinrichtung sind verschiedene konstruktive Ausführungen von Schleifkontakten bekannt. Das Ableiten elektrostatischer Ladungen durch mechanischen Kontakt mit einer Entladungseinrichtung ist jedoch verschleißbehaftet und führt daher durch kontinuierlichen Betrieb des Langstator-Linearmotorsystems zu Verschleiß an den Läufern und der Kontakteinrichtung.

Der vorliegenden Erfindung liegt somit weiterhin die Aufgabe zugrunde, eine möglichst verschleißarme Neutralisierung elektrostatischer Ladungen auf den Läufern eines Langstator-Linearmotorsystems zu ermöglichen. Ganz allgemein liegt der vorliegenden Erfindung die Aufgabe zugrunde, die Standzeit des Langstator-Linearmotorsystems zu verlängern und die Wartungskosten zu reduzieren.

Die oben genannte Aufgabe wird gelöst durch ein Langstator-Linearmotorsystem mit einer Transportbahn und einer Vielzahl von Läufern, die an der Transportbahn beweglich gelagert sind, wobei an der Transportbahn wenigstens eine Vorrichtung zum elektrostatischen Laden und/oder Entladen der Läufer vorgesehen ist, und wobei die Vorrichtung dazu ausgebildet ist, die Läufer mittels eines Fluides berührungslos zu laden und/oder zu entladen.

Wie erwähnt sind Langstator-Linearmotorsysteme im Stand der Technik wohl bekannt, sodass hier auf eine detaillierte Beschreibung verzichtet wird. Ein Langstator-Linearmotorsystem weist dabei stets eine Transportbahn auf, die insbesondere eine oder mehrere Führungsschienen umfassen kann, entlang derer die Vielzahl von Läufern individuell gesteuert bewegt werden können. Die individuelle Bewegung der Läufer geschieht dabei durch magnetische Wechselwirkung der Sekundärteile der Läufer mit dem oder den Langstatoren des Langstator-Linearmotorsystems. Um Wiederholungen zu vermeiden, wird hier lediglich auf die oben beschriebenen Weiterbildungen der Läufer, insbesondere der Sekundärteile mit Permanentmagneten oder nicht schaltenden Elektromagneten als passive Läufer bzw. mit gezielt angesteuerten Elektromagneten als aktive Läufer verwiesen. Entsprechend können wie oben erwähnt die Langstatoren als synchrone oder asynchrone Linearmotorstränge ausgebildet sein.

Wie erwähnt tritt eine elektrostatische Aufladung der Läufer aufgrund der Relativbewegung von zumindest teilweise mechanisch an der Transportbahn, insbesondere an den Führungsschienen, gelagerten Läufer und der Transportbahn auf. Die vorliegende Erfindung kann jedoch auch auf vollständig magnetisch gelagerte oder vollständig pneumatisch gelagerte Läufer angewendet werden, welche auf irgendeine andere Weise elektrostatisch aufgeladen werden. Insbesondere können die im Folgenden beschriebenen Weiterbildungen auch zum gezielten Aufladen ungeladener Läufer mit einer gewünschten Ladungspolarität verwendet werden. Explizit sind die im Folgenden beschriebenen Weiterbildungen insbesondere auf die oben beschriebenen Läufer, welche mittels Lauf- und/oder Führungsrollen an Führungsschienen gelagert sind, anwendbar. Die vorliegende Erfindung ist jedoch nicht auf die oben beschriebenen Läufer beschränkt, sondern ganz allgemein auf Langstator-Linearmotorsysteme anwendbar.

Gemäß der vorliegenden Erfindung ist stationär an der Transportbahn wenigstens eine Vorrichtung zum elektrostatischen Laden und/oder Entladen der Läufer vorgesehen, wobei die Vorrichtung dazu ausgebildet ist, die Läufer mittels eines Fluides berührungslos zu laden und/oder zu entladen. Die Vorrichtung zum elektrostatischen Laden und/oder Entladen der Läufer, im Folgenden kurz Entladungsvorrichtung genannt, ist an der Transportbahn derart angeordnet, dass vorbeifahrende Läufer über Ladungsaustausch mit einem Fluid geladen oder entladen werden können. Dementsprechend ist die Entladungsvorrichtung im Bereich der Transportbahn in einem Abstand und einer Position angeordnet, dass das Fluid von der Entladungsvorrichtung ausgehend in Kontakt mit der zu entladenden bzw. der zu ladenden Oberfläche der Läufer gebracht werden kann. Hier und im Folgenden ist der Begriff "berührungslos" bezüglich des Ladens und/oder Entladens derart zu verstehen, dass zum Laden und/oder Entladen kein mechanischer Kontakt mit einem Festkörper, beispielsweise einem Schleifkontakt, hergestellt werden muss. Die Entladungsvorrichtung kann vielmehr derart ausgebildet sein, dass sie einen Strom des Fluides in Richtung des zu entladenden und/oder zu ladenden Läufers abgibt. Dabei kann die Entladungsvorrichtung weiterhin dazu ausgebildet sein, das Fluid vor oder bei der Abgabe mit einer gewünschten Ladungspolarität elektrisch zu laden.

Um einen elektrostatisch aufgeladenen Läufer zu entladen, kann die Entladungsvorrichtung dazu ausgebildet sein, das abgegebene Fluid mit Ladungen der inversen Polarität der Ladung des Läufers elektrisch zu laden. Dies kann durch Vorauswahl vorgegeben sein, beispielsweise wenn aufgrund der verwendeten Materialien für die Lagerungselemente der Läufer und die Transportbahn bzw. Führungsschienen eine elektrostatische Aufladung mit vorgegebener Polarität stattfindet.

Alternativ kann im Vorlauf zur Entladungsvorrichtung ein Sensor an der Transportbahn vorgesehen sein, der dazu ausgebildet ist, die Polarität der elektrostatischen Aufladung der an dem Sensor vorbeigeführten Läufer zu bestimmen. Der Sensor kann beispielsweise als Potenzialsensor (EPS - electric potential sensor), insbesondere als Oberflächenpotenzialsensor, Ionengleichgewichtserfassungsmittel oder Potenzialerfassungseinrichtung ausgebildet sein. Mittels des Sensors lässt sich somit die Polarität der elektrostatischen Aufladung bestimmen. Zusätzlich kann der Sensor dazu ausgebildet sein, den Betrag der elektrischen Ladung auf der Oberfläche des Läufers zu bestimmen.

Gemäß einer Weiterbildung kann der Sensor über eine Signalleitung oder einen Sender mit einer Steuereinrichtung verbunden sein, die dazu ausgebildet ist, in Abhängigkeit von den von dem Sensor übermittelten Signalen die Polarität und/oder den Betrag der von der Entladungsvorrichtung pro Zeiteinheit erzeugten Ladungen zu regeln. Hierzu kann die Entladungsvorrichtung derart ausgebildet sein, dass sie, beispielsweise durch Anpassung elektrischer Ströme, das Fluid entweder positiv oder negativ aufladen kann. Dementsprechend können im Fluid positive oder negative Ionen generiert werden, welche dann zusammen mit dem Fluid in Richtung Läufer abgegeben werden. Durch Kontakt der positiven oder negativen Ionen mit der geladenen Oberfläche des Läufers wird dieser entladen. Mittels des Sensors und der Steuereinrichtung kann, beispielsweise durch Anpassung der Stromstärke, der Fluss der positiven oder negativen Ionen derart geregelt werden, dass die aufgeladene Oberfläche des Läufers im Wesentlichen neutralisiert wird.

Es sind jedoch auch Weiterbildungen vorstellbar, bei denen die Oberfläche des Läufers oder ein Teil derselben durch Kontakt mit den positiven oder negativen Ionen gezielt aufgeladen wird. Die gezielt aufgebrachten Ladungen können anschließend zur Durchführung von speziellen Funktionen des Läufers verwendet werden. Hierzu können die Läufer einen oder mehrere Kondensatoren aufweisen, welche die aufgebrachten Ladungen speichern. Die so gespeicherte Ladungsenergie kann anschließend verwendet werden, um beispielsweise mitbewegte Sensoren oder Aktoren der Läufer zu betreiben. Ebenso kann die aufgebrachte Ladung zum Aufnehmen von Gegenständen entgegengesetzter Ladung per elektrostatischer Anziehungskraft verwendet werden. Des Weiteren können die Läufer durch gezieltes Aufbringen von Ladungen auch individuell markiert werden, beispielsweise zur Produktverfolgung. Mittels eines weiteren Potenzialsensors, der stromabwärts von Entladungsvorrichtung angeordnet ist, lassen sich die derart aufgeladenen Läufer eindeutig identifizieren. Das erfindungsgemäße Langstator-Linearmotorsystem kann somit einen weiteren Potenzialsensor aufweisen, der dazu ausgebildet ist, den Betrag der elektrostatischen Aufladung der an ihm vorbeigeführten Läufer zu bestimmen. Auch dieser Potenzialsensor kann mit der Steuereinrichtung verbunden sein, die dann in Abhängigkeit von dem identifizierten Läufer bestimmte Behandlungsschritte an einem mitgeführten Produkt vornehmen lässt.

In der Grundausbildung kann die vorliegende Erfindung eine Entladungsvorrichtung umfassen, die dazu ausgebildet ist, die geladenen Oberflächen der vorbeigeführten Läufer zu neutralisieren. Die Entladung der Läufer kann dabei insbesondere stromaufwärts von einer an der Transportbahn angeordneten Reinigungsstation zum Reinigen der Läufer erfolgen. Da Schmutzpartikel nach der Neutralisierung der Oberflächen der Läufer weniger stark anhaften, können diese leichter gereinigt werden.

Eine Vielzahl weiterer Ausführungsformen ist im Zusammenhang mit dem erfindungsgemäßen Langstator-Linearmotorsystem vorstellbar. Die hier beschriebenen Weiterbildungen der Entladungsvorrichtung umfassen dabei auch Vorrichtungen, die gezielt dem Laden der Läufer mit gewünschten Ladungen dienen.

Gemäß einer Weiterbildung kann es sich bei dem Fluid um ein Gas handeln, das mittels der Entladungsvorrichtung teilweise ionisiert wird. Bei dem Gas kann es sich insbesondere um Lufthandeln. Die Entladungsvorrichtung kann als lonisator, beispielsweise als Hochspannungsionisator ausgebildet sein. Die Entladungsvorrichtung ist dabei dazu ausgebildet, die sie umgebende Luft partiell zu ionisieren. Dazu kann der lonisator mit leitfähigen Spitzenelektroden, beispielsweise in Form eines Kamms oder Sägezahns, ausgebildet sein, an denen Atome und Moleküle der Luft durch Koronaentladung und Feldemission ionisiert werden. Beispielsweise können durch die Feldemission Sauerstoffmoleküle positiv oder negativ geladen werden, sodass entsprechende Sauerstoffionen gebildet werden. Das teilweise ionisierte Gas kann anschließend in Kontakt mit der zu entladenden Oberfläche des Läufers gebracht werden.

Hierzu kann die Entladungsvorrichtung des Weiteren eine Gaszufuhrvorrichtung aufweisen, mittels derer das Gas an den Elektroden des Ionisators vorbei zur Oberfläche der Läufer geführt werden kann. Beispielsweise kann es sich bei dieser Gaszufuhrvorrichtung um ein Blasrohr handeln, das in Richtung der vorbeigeführten Läufer ausgerichtet ist. Alternativ kann die Gaszufuhrvorrichtung eine Strömungsleitung mit einem Ventil aufweisen, die mit einer Luftzufuhrquelle, beispielsweise einer Druckluftquelle, verbunden ist. Durch gezieltes Öffnen und Schlie-ßen eines regelbaren Ventils lässt sich somit gezielt eine Menge an Gasionen pro Zeiteinheit in Kontakt mit der zu entladenden Oberfläche bringen.

Die Gaszufuhrvorrichtung kann dazu ausgebildet sein, das ionisierte Gas kontinuierlich oder per Gasimpuls gezielt in Richtung der Läufer zu leiten. Insbesondere kann die Gaszufuhrvorrichtung in Zusammenwirkung mit der Steuereinrichtung dazu ausgebildet sein, ionisiertes Gas nur dann abzugeben, wenn sich ein Läufer im Bereich der Entladungsvorrichtung befindet, um ein unerwünschtes Aufladen der Transportbahn zu vermeiden.

Eine Auf- oder Entladung der Läufer mittels Hochspannungsionisators erfolgt berührungslos und verschleißfrei. Gegenüber den auf mechanischem Kontakt beruhenden Entladungsvorrichtungen des Stands der Technik arbeitet die beschriebene erfindungsgemäße Entladungsvorrichtung somit zuverlässiger und wartungsärmer. Das Verfahren - insbesondere mit Luftzufuhr - arbeitet bei der Auf- oder Entladung sich schnell bewegender Objekte, wie zum Beispiel der Läufer, sehr effektiv. Zudem können existierende Transportsysteme durch Anordnen des oben beschriebenen Hochspannungsionisators an der Transportbahn auf einfache Weise umgerüstet werden. Eine konstruktive Veränderung des Transportsystems, insbesondere der Läufer, ist somit nicht erforderlich.

Gemäß einer alternativen Weiterbildung kann es sich bei dem Fluid um eine elektrisch leitende Flüssigkeit handeln. Bevorzugt kann eine elektrisch leitende Flüssigkeit, beispielsweise ein Elektrolyt, verwendet werden, die weder korrosiv oder ätzend ist, noch Ablagerungen bildet. Die Entladungsvorrichtung kann dann dazu ausgebildet sein, einen Strahl der elektrisch leitenden Flüssigkeit auf die zu entladende Oberfläche der vorbeigeführten Läufer zu richten. Auch hier kann die Entladungsvorrichtung einen solchen Flüssigkeitsstrahl insbesondere gepulst abgeben, wenn gerade ein Läufer die Entladungsvorrichtung passiert. Das Langstator-Linearmotorsystem kann zudem unterhalb der Transportbahn eine Auffangvorrichtung für herabtropfende Flüssigkeit aufweisen, von der die Flüssigkeit über eine Leitung zurück zur Entladungsvorrichtung geleitet werden kann.

Um den Flüssigkeitsstrahl auf die vorbeigeführten Läufer richten zu können, kann die Entladungsvorrichtung beispielsweise einen oder mehrere fest angebrachte Sprühköpfe aufweisen, die die vorbeifahrenden Läufer kontinuierlich oder gepulst mit der elektrisch leitenden Flüssigkeit besprühen. Die Sprühköpfe oder allgemein eine Zuleitung der elektrisch leitenden Flüssigkeit können mit einem Potenzialausgleich verbunden sein, indem sie beispielsweise geerdet sind. Bei Kontakt der zu entladenden Oberfläche mit dem Flüssigkeitsstrahl wird die überschüssige Ladung somit durch elektrische Leitung in dem Flüssigkeitsstrahl zum Sprühkopf bzw. zur Zuleitung abgeführt.

Wie bei der Verwendung eines Gases ist auch die Entladung der Läufer per Flüssigkeitsstrahl berührungslos und verschleißfrei. Im Vergleich zum kontaktbasierten Verfahren des Stands der Technik ist die beschriebene Entladungsvorrichtung wartungsärmer und daher kostengünstiger. Wie bei der Entladung mittels Gas ist auch bei der flüssigkeitsbasierten Entladungsvorrichtung keine konstruktive Veränderung des Transportsystems oder der Läufer erforderlich. Existierende Langstator-Linearmotorsysteme können daher auf einfache Weise mit der oben beschriebenen Entladungsvorrichtung nachgerüstet werden.

Die oben genannte Aufgabe wird auch durch ein Verfahren zum berührungslosen Laden und/oder Entladen von Läufern eines Langstator-Linearmotorsystems mit den folgenden Schritten gelöst: Zuführen eines zu entladenden und/oder zu ladenden Läufers zu einer Entladungsstation und berührungsloses Entladen und/oder Laden des Läufers mittels eines Fluides im Bereich der Entladungsstation. Auch hier wird der Begriff "Entladungsstation" allgemein sowohl für eine Station zum Entladen als auch für eine Station zum Laden der Läufer verwendet. Wie oben beschrieben kann das berührungslose Entladen und/oder Laden mittels eines Fluides durch Zufuhr eines ionisierten Gases, insbesondere von ionisierter Luft, und/oder durch Zufuhr einer elektrisch leitenden Flüssigkeit mittels der Entladungsstation erfolgen. Das erfindungsgemäße Verfahren kann somit auch das gesteuerte Ionisieren des Gases, beispielsweise mittels eines regelbaren Hochspannungsionisators, umfassen. Ebenso kann das Verfahren das gesteuerte kontinuierliche oder gepulste Zuführen des ionisierten Gases bzw. der elektrisch leitenden Flüssigkeit zu der zu entladenden bzw. zu ladenden Oberfläche des Läufers umfassen.

Dies kann wie oben beschrieben mittels einer Gaszufuhrvorrichtung, beispielsweise einer Druckluftzufuhr, einem Blasrohr und/oder einem Ventil, erfolgen. Entsprechend kann die Zufuhr der elektrisch leitenden Flüssigkeit mittels eines Sprühkopfes in Form eines Flüssigkeitsstrahls erfolgen.

Das Verfahren kann weiterhin das Erfassen einer Polarität und/oder eines Betrags der elektrostatischen Ladung eines Läufers im Zulauf zur Entladungsstation, beispielsweise mittels eines elektrischen Potenzialsensors, umfassen. Die gemessene Polarität und/oder der gemessene Betrag der elektrostatischen Ladung kann mittels Signalleitung oder kabellos an eine Steuereinrichtung übermittelt werden, die die Entladungsstation entsprechend zur gezielten Abgabe der zur Neutralisierung erforderlichen Menge an ionisiertem Gas steuert.

Wie oben beschrieben können die Läufer auch gezielt elektrostatisch in der Entladungsstation aufgeladen werden. Beispielsweise kann eine mittels der Entladungsstation auf die Läufer aufgebrachte Ladung in einem mitgeführten Kondensator der Läufer gespeichert werden, um zu einem späteren Zeitpunkt mitbewegte Sensoren oder Aktoren zu betreiben. Das Verfahren kann somit auch das gezielte elektrostatische Aufladen der Läufer umfassen. Per elektrostatische Anziehungskraft können entgegengesetzt geladene Gegenstände nach Aufladung der Läufer von diesen aufgenommen werden. Des Weiteren können die Läufer durch individuelle Aufladung beispielsweise für die Produktverfolgung markiert werden. Hierzu kann wie oben beschrieben stromabwärts von der Entladungsstation mittels eines weiteren Potenzialsensors der jeweils vorbeigeführte Läufer eindeutig identifiziert werden.

Das Verfahren kann zudem nach Entladung der Läufer in der Entladungsstation eine automatische Reinigung der Läufer in einer Reinigungsstation des Langstator-Linearmotorsystems umfassen. Nach Neutralisierung der elektrostatischen Ladungen lassen sich die Läufer erheblich leichter reinigen, da Schmutzpartikel dann weniger stark anhaften.

Dieselben Variationen und Weiterbildungen, die zuvor im Zusammenhang mit dem erfindungsgemäßen Langstator-Linearmotorsystem beschrieben wurden, lassen sich auch auf das erfindungsgemäße Verfahren zum berührungslosen Laden und/oder Entladen der Läufer anwenden.

Die beschriebenen Vorrichtungen und Verfahren sind dabei sowohl zuverlässiger als auch wartungsärmer als die kontaktbasierten Entladungsvorrichtungen des Stands der Technik. Zudem lassen sich existierende Langstator-Linearmotorsysteme ohne konstruktive Veränderung mit den beschriebenen Vorrichtungen auf einfache Weise nachrüsten.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1 stellt eine Prinzipskizze eines Langstator-Linearmotorsystems mit einem Läufer des Stands der Technik dar.
Figur 2 zeigt den Läufer des Stands der Technik bei der Kurvenfahrt.
Figur 3 erläutert exemplarisch den Spurfehler einer ungelenkten Rolle bei der Kurvenfahrt.
Figur 4 zeigt eine alternative Ausbildung eines Läufers und einer Transportbahn gemäß dem Stand der Technik.
Figur 5 zeigt eine beispielhafte Ausführung eines Läufers mit Drehschemellenkung gemäß der vorliegenden Erfindung.
Figur 6 zeigt den Läufer der Figur 5 in senkrechter Draufsicht auf die Bewegungsebene entlang eines geraden Stücks der Transportbahn.
Figur 7 zeigt den Läufer der Figur 5 in senkrechter Draufsicht auf die Bewegungsebene entlang eines Kurvenstücks der Transportbahn.
Figur 8 zeigt einen dreidimensionalen Aufriss einer einzeln lenkbaren Rolle mit integriertem Nachlauf gemäß der vorliegenden Erfindung.
Figur 9 verdeutlicht den integrierten Nachlauf der in der Figur 8 gezeigten Rolle.
Figur 10 zeigt das Sekundärteil eines Läufers des Stands der Technik.

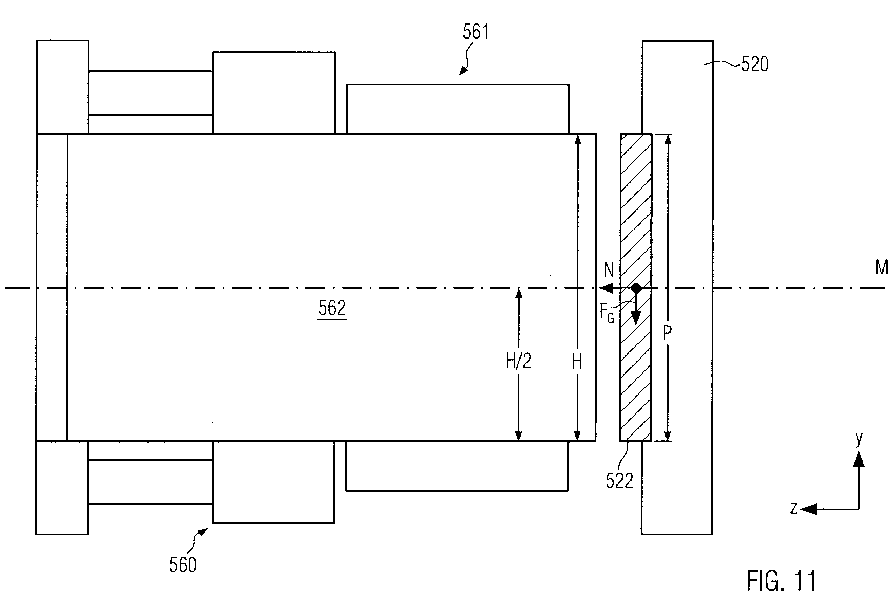

Figur 11 zeigt schematisch die relative Anordnung der Magnete des Sekundärteils und des Langstators für den Läufer der Figur 10.
Figur 12 zeigt schematisch die relative Anordnung der Magnete des Sekundärteils eines Läufers gemäß der vorliegenden Erfindung.
Figur 13 zeigt schematisch die relative Anordnung der Magnete des Sekundärteils eines weiteren Läufers gemäß der vorliegenden Erfindung.
Figur 14 zeigt schematisch eine dreidimensionale Darstellung eines Langstator-Linearmotorsystems mit Entladungsstation gemäß der vorliegenden Erfindung.
Figur 15 zeigt eine beispielhafte Ausführung eines Läufer mit Drehschemellenkung und verschwenkbarem Führungselement gemäß der vorliegenden Erfindung.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

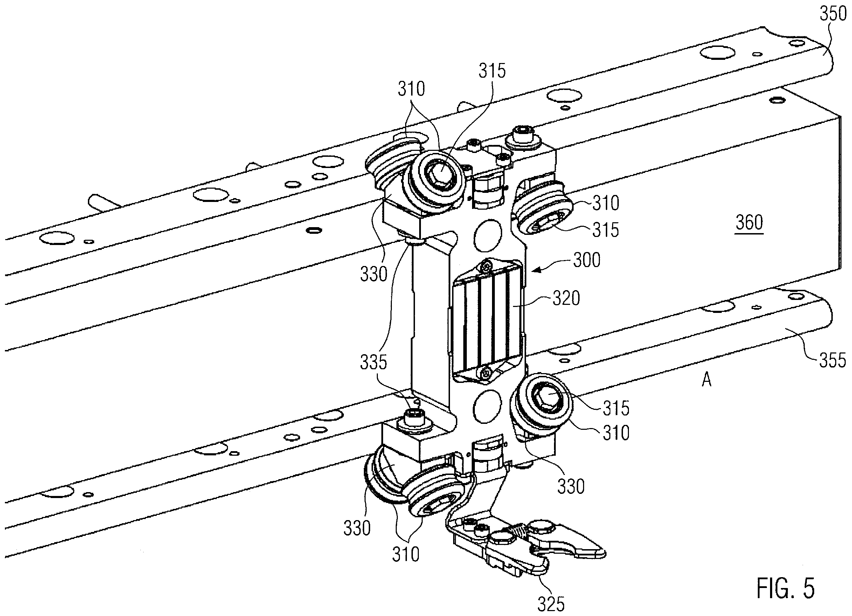

In der Figur 5 ist schematisch eine beispielhafte Ausführung eines Läufers mit Drehschemellenkung gemäß der vorliegenden Erfindung dargestellt. Der hier gezeigte Läufer 300 ist mittels einer Vielzahl von Rollen 310 an oberen Führungsschienen 350 und unteren Führungsschienen 355 individuell beweglich gelagert. Wie bereits in der Figur 1 sind der Übersichtlichkeit halber lediglich die rückwärtig gelegenen Führungsschienen der oberen und unteren Führungsschienenpaare dargestellt. In der Tat bewegt sich der Läufer 300 jedoch zwischen oberen und unteren Führungsschienenpaaren, wobei jeweils eine Rolle 310 eines Rollenpaares an der rückwärtigen Führungsschiene gelagert ist und jeweils die andere Rolle 310 des Rollenpaares an der vorderen, nicht dargestellten Führungsschiene gelagert ist. Die Ausbildung mit Doppelschienen gestattet eine besonders stabile Führung des Läufers 300. Es sind jedoch auch Weiterbildungen denkbar, bei denen die Läufer wie in Figur 4 lediglich einseitig an senkrecht übereinander stehenden Führungsschienen gelagert sind. In diesem Fall werden lediglich auf der Seite der Führungsschienen Rollen an den Drehschemeln vorgesehen. Die im Folgenden beschriebenen Weiterbildungen der Drehschemel und des Führungselements bleiben aber auch bei der einseitigen Linearmotorführung anwendbar.

Von dem Langstator-Linearmotorsystem ist in der Figur 5 zusätzlich zu den Führungsschienen 350 und 355 lediglich schematisch ein Linearmotorstrang 360 dargestellt. Um einen besseren Vortrieb zu erreichen, kann jedoch, wie durch die Anordnung weiterer Magnete auf der Vorderseite des Sekundärteils 320 angedeutet, ein weiterer Linearmotorstrang (nicht dargestellt) vorgesehen sein, der parallel zu dem dargestellten Linearmotorstrang 360 entlang der nicht gezeigten vorderen Führungsschienen verläuft. In der Figur 5 ist ein gerades Teilstück A der Transportbahn, d.h. der Führungsschienen 350 und 355 sowie des Linearmotorstrangs 360 dargestellt. In der in der Figur 5 dargestellten, nicht limitierenden Weiterbildung ist der Läufer 300 mit einer Halteeinrichtung 325 in Form einer Neckhandlingklammer ausgebildet, mittels derer beispielsweise Kunststoffflaschen transportiert werden können.

Der in der Figur 5 gezeigte Läufer 300 ist zudem mit der erfindungsgemäßen Drehschemellenkung ausgebildet. Hierzu verfügt der Läufer 300 über insgesamt vier Drehschemel 330, welche mittels Königsbolzen 335 um eine Achse senkrecht zur Bewegungsebene drehbar an dem Läufer 300 befestigt sind. Die Drehschemel 330 tragen dabei jeweils ein Rollenpaar von an gegenüberliegenden Führungsschienen angreifenden Rollen 310 und ermöglichen wie oben beschrieben das Ausrichten der Rotationsachsen der Rollen 310 gemäß dem Krümmungsradius des jeweiligen Wegstücks.

In der hier dargestellten, nicht limitierenden Weiterbildung sind die Rollen 310 über starre Rollenachsen 315 drehbar an den Drehschemel 330 gelagert. Dabei sind die Rollen derart an den Drehschemeln 330 gelagert, dass die Projektionsachsen, d.h. die Projektionen der Rollenachsen 315 auf die Bewegungsebene, zusammenfallen.

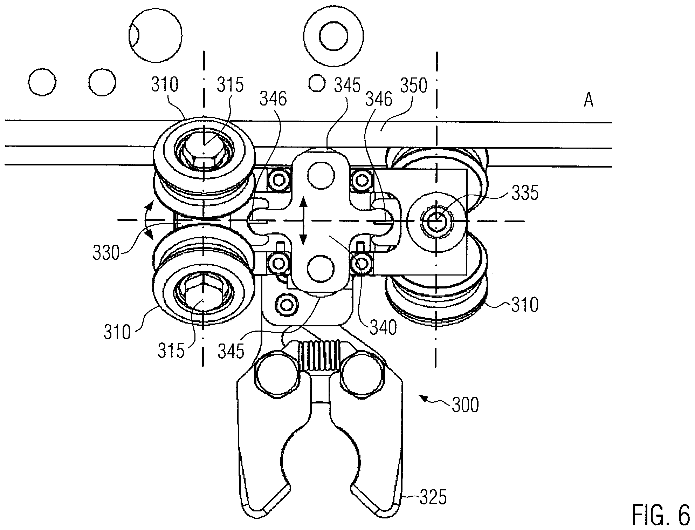

Die Projektionsachsen der Rollen sind in der Figur 6, welche eine senkrechte Draufsicht auf die Bewegungsebene zeigt, durch strichgepunktete Linien angedeutet. Da es sich bei dem Wegstück um ein gerades Wegstück A handelt, sind die Projektionsachsen parallel zueinander, was einer Kurve mit unendlichem Krümmungsradius entspricht. Die Figur 6 zeigt weiterhin, dass die Rollen 310 derart über ihre starren Rollenachsen 315 an den Drehschemel 330 gelagert sind, dass die Projektionsachsen mit einer Mittelachse der Drehschemel 330 zusammenfallen. Alternative Weiterbildungen, bei denen dies nicht der Fall ist, sind jedoch ebenfalls möglich.

Wie durch den Doppelpfeil in der Figur 6 angedeutet sind die Drehschemel 330 um eine Achse senkrecht zur Bewegungsebene drehbar. Gemäß der hier gezeigten Weiterbildung wird die Drehung der Drehschemel über ein entlang der Führungsschiene 350 abrollendes Führungselement in Form einer Führungsrolle 345 bewirkt. Die Führungsrolle 345 ist in der dargestellten Weiterbildung auf beiden Seiten eines senkrecht zu einer gestrichelt dargestellten Längsachse des Läufers 330 verschiebbaren Schiebers 340 vorgesehen, sodass der Schieber 340 über den Eingriff der Führungsrollen 345 mit den Führungsschienen wie durch den Doppelpfeil angedeutet senkrecht zur Längsachse des Läufers 300 verschoben werden kann.

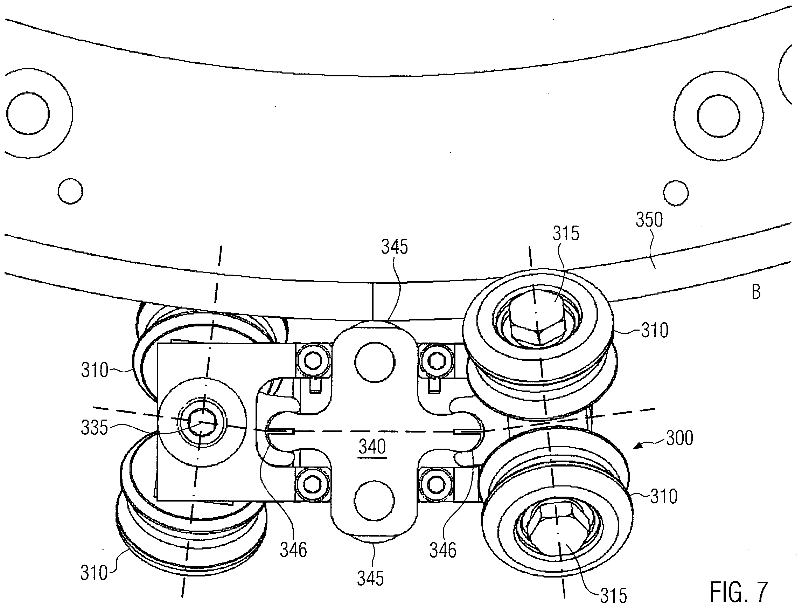

In der dargestellten Weiterbildung wird die translatorische Bewegung des Schiebers 340 bei Eintritt in ein Kurvenstück über den Eingriff von seitlichen Armen des Schiebers in entsprechende Nute 346 der Drehschemel 330 in eine Drehbewegung der Drehschemel 330 umgesetzt. Dabei gibt das Verhältnis der Länge der Arme des Schiebers 340 zum Abstand der Nute 346 von der jeweiligen Mittelachse bzw. dem Lagerbolzen 335 des Drehschemels 330 aufgrund des Hebelarms eine Übersetzung zwischen der translatorischen Bewegung des Schiebers 340 und der Änderung der Drehstellung der Drehschemel 330 vor. Wie oben beschrieben kann der Hebelarm derart gewählt werden, dass die Projektionsachsen der Rollen 310 bei der Kurvenfahrt wie in Figur 7 dargestellt in Richtung des Kurvenmittelpunkts ausgerichtet werden.

In der Figur 7 ist der Läufer 300 entlang eines Kurvenstücks B der Transportbahn dargestellt. Aufgrund der Krümmung der Führungsschiene 350 wird die der Führungsschiene folgende Führungsrolle 345 senkrecht zur Längsachse des Läufers 300 verschoben, wie es in der Figur durch die gestrichelte Linie angedeutet ist. Dadurch dreht sich die Lagerung des Schiebers 340 in den Nuten 346 und verändert so die Drehstellung der Drehschemel 330, wie es in der Figur durch die strichgepunkteten Linien angedeutet ist.

Da die Rollen 310 mit ihren Rollenachsen 315 derart an den Drehschemeln 330 gelagert sind, dass die Projektionsachsen der Rollen jedes Rollenpaares zusammenfallen, wird durch die gezeigte Vorrichtung automatisch eine Ausrichtung aller gelenkten Rollen in Richtung Kurvenradius bewirkt. Dadurch fallen anders als bei dem in Figur 3 gezeigten Läufer des Stands der Technik stets die Fahrtrichtung K und die Rollrichtung R der Laufrollen des erfindungsgemäßen Läufers 300 zusammen. Die gesteuerte Lenkung der Laufrollen reduziert dabei erheblich den durch den Spurfehler verursachten Verschleiß der Laufrollen.

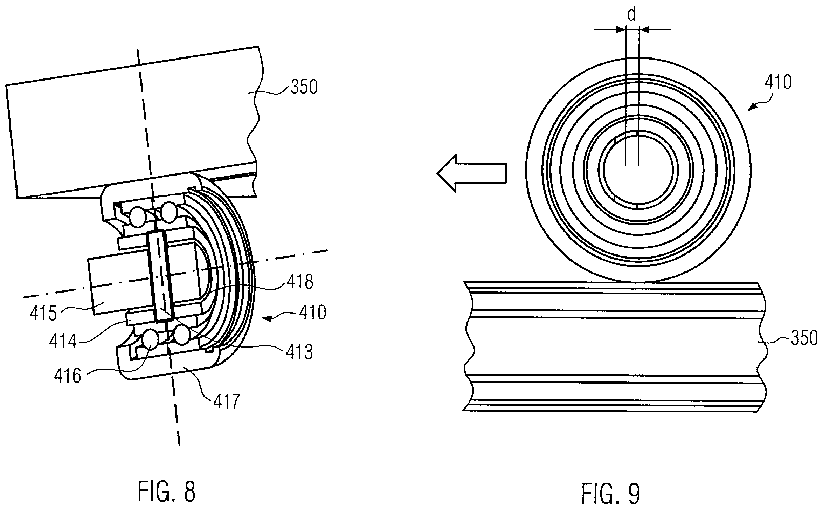

Figur 8 zeigt einen dreidimensionalen Aufriss einer einzeln lenkbaren Rolle mit integriertem Nachlauf gemäß der vorliegenden Erfindung. Die in der Figur gezeigte Laufrolle 410 weist eine ebene Abrollfläche auf, mit der sie auf der Führungsschiene 350 bzw. der Transportbahn abrollt. Die vorliegende Erfindung kann jedoch auch auf Rollen mit balligen, d.h. konvexen, oder konkaven Abrollprofilen angewendet werden.

Die in den Figuren 8 und 9 dargestellte Laufrolle 410 ist mit einem integrierten Nachlauf ausgebildet. Hierzu weist die Rolle 410 einen Pendelring 414 auf, der über einen Schwenkbolzen 413 drehbar an der starren Rollenachse 415 gelagert ist. Wie aus der Figur 9 ersichtlich ist der Schwenkbolzen 413 dabei durch eine asymmetrische, d.h. außermittige, Bohrung durch die Rollenachse 415 geführt. Je nach Ausbildung kann der Schwenkbolzen 413 drehfest oder drehbar in dieser Bohrung gelagert sein. Entsprechend ist der Pendelring 414 drehbar bzw. drehfest an dem Schwenkbolzen 413 gelagert.

Um eine Verschwenkbarkeit des Pendelrings 414 gegenüber der strichgepunktet angedeuteten zentralen Achse der Rollenachse 415 zu ermöglichen, ist der Pendelring 414 über einen Ringspalt 418 von der Rollenachse 415 beabstandet. Dies kann wie oben beschrieben beispielsweise durch Presspassung, Klebung oder Vorsehen eines abgesetzten Bolzens, oder durch Distanzelemente geschehen. Aufgrund des Ringspaltes 418 kann der Pendelring 414 innerhalb eines gewünschten Winkelbereichs um die Ausrichtung der Rollenachse 415 verschwenkt werden. Da der Pendelring über den Schwenkbolzen 413 asymmetrisch bezüglich der zentralen Achse der Rollenachse 415 gelagert ist, weist die Rolle 410 einen positiven, integrierten Nachlauf d auf, wie er in der Figur 9 dargestellt ist. Der Nachlauf bewirkt dabei, dass bei einer Änderung des Krümmungsradius der Transportbahn ein Rückstellmoment auf die Rolle 410 wirkt, die den Pendelring 414 und damit die Rotationsachse der Rolle automatisch in Fahrtrichtung ausrichtet.

Gemäß der gezeigten Weiterbildung ist der Pendelring 414 mit einem außenliegenden Wälz- oder Gleitlager 416 ausgebildet, auf dem der Außenring 417, der die Abrollfläche der Rolle 410 bildet, abrollt oder gleitet. Die Stellung des Pendelrings 414 definiert somit die momentane Rotationsachse der Rolle 410. Der Schwenkbolzen 413 definiert dabei die in der Figur 8 gestrichelt angedeutete Lenkungsdrehachse, um die die Rolle 410 einzeln lenkbar ist. Die mit der Lenkungsdrehachse mit integriertem Nachlauf ausgebildete Rolle 410 ist äußerst kompakt ausgebildet und kann somit vielseitig in Langstator-Linearmotorsystemen eingesetzt werden. Insbesondere kann die Einzelradlenkung der vorliegenden Weiterbildung mit der oben beschriebenen Drehschemellenkung kombiniert werden. Durch die Einzelradlenkung können verbleibende Restspurfehler der Laufrollen kompensiert werden, sodass der Verschleiß der Laufrollen minimiert werden kann.

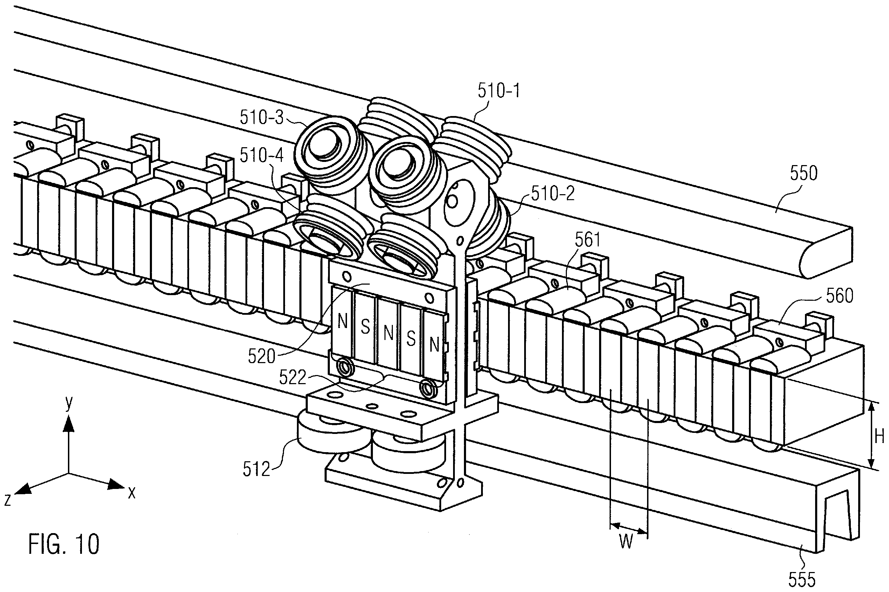

In Figur 10 ist eine Variation eines Läufers gemäß dem in der Figur 1 dargestellten Stand der Technik gezeigt. Wie in der Figur 1 ist auch der in der Figur 10 gezeigte Läufer über Laufrollen 510-1 bis 510-4 an einer oberen Führungsschiene 550 gelagert. Zusätzlich weist der Läufer der Figur 10 Führungsrollen 512 auf, mit denen der Läufer an der unteren Führungsschiene 555 geführt wird. Der besseren Übersichtlichkeit halber sind auch hier lediglich die hinteren Führungsschienen 550 und 555 sowie der hintere Langstator 560 gezeigt.

Wie in der Figur 10 schematisch dargestellt weist der Langstator 560 eine Reihe von Spulen 561 auf, deren Eisenkerne eine Höhe H senkrecht zur Bewegungsrichtung, d.h. in Y-Richtung, besitzen. Die Spulen 561 sind dabei in einem Abstand W voneinander entlang des Langstators angeordnet. Die magnetischen Wechselfelder der Spulen 561 wechselwirken dabei mit den mit abwechselnder Polung N bzw. S in einer Reihe, d.h. Sequenz 522 angeordneten Permanent- und/oder nicht schaltenden Elektromagneten des Sekundärteils 520, welches in der vertikalen Konfiguration gezeigt ist. Anhand der Darstellung in Figur 10 ist erkennbar, dass die Ausdehnung der Magnete 522 des Sekundärteils 520 in Y-Richtung der Höhe H der Eisenkerne der Spulen 561 entspricht. Anstelle der hier dargestellten, nicht limitierenden Sequenz abwechselnder Polungen kann auch ein einzelner Magnet als Magnet des Sekundärteils 520 verwendet werden.

In Figur 1 1 ist schematisch die relative Anordnung des oder der Magnete 522 des Sekundärteils 520 des Läufers der Figur 10 und des Eisenkerns 562 der Spule 561 des Langstators 560 dargestellt. Der Eisenkern 562 und die Magnete 522 des Sekundärteils 520 weisen im Stand der Technik die gleiche Höhe H auf. Zusätzlich sind die Magnete 522 an dem Sekundärteil 520 symmetrisch bezüglich einer Mittelebene M des Langstators 560 angeordnet, was durch die gestrichelte Linie in der halben Höhe H/2 angedeutet ist. Aufgrund der symmetrischen Anordnung wirkt die magnetische Wechselwirkungskraft N senkrecht zur Vertikalen, d.h. in Z-Richtung, und hat daher keinen Einfluss auf die senkrecht nach unten wirkende Schwerkraft FG.

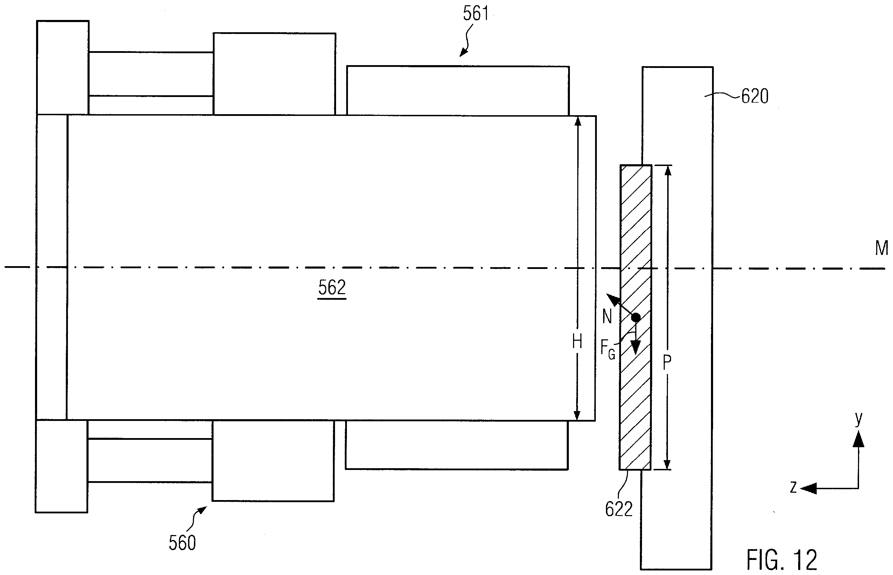

Im Gegensatz zu der symmetrischen Anordnung des Stands der Technik sind der oder die Magnete 622 des Sekundärteils 620 eines Läufers gemäß der vorliegenden Erfindung, wie in Figur 12 schematisch dargestellt, asymmetrisch bezüglich der Mittelebene M des Langstators 560 angeordnet. In der in der Figur 12 dargestellten Weiterbildung sind die Magnete 622 bezüglich der Mittelebene M nach unten verschoben. Da in dieser Weiterbildung die Höhe P der Magnete 622, d.h. ihre vertikale Ausdehnung, gleich der Höhe H des Eisenkerns 562 ist, wird durch die Verschiebung der Magnete 622 nach unten der Gesamtüberlapp zwischen dem Eisenkern 562 und den Magneten 622 reduziert.

Damit befindet sich das aufgrund der Magnete 622 paramagnetische Sekundärteil energetisch nicht mehr in der optimalen Position, sodass die magnetische Wechselwirkungskraft N nunmehr schräg nach oben gerichtet ist, wodurch das Sekundärteil 620 in eine energetisch günstigere Position gezogen wird. Dem wirkt jedoch die nach unten gerichtete Schwerkraft FG entgegen, sodass das Sekundärteil 620 zwar in seiner gezeigten Position verharrt, die Gewichtskraft FG, die auf die Rollen des Läufers wirkt, jedoch um die vertikale Komponente der magnetischen Wechselwirkungskraft N reduziert wird. Da jedoch auch der Überlapp zwischen den Magneten 622 und dem Eisenkern 562 nicht mehr vollständig ist, ist auch die Vortriebskraft, die durch die magnetische Wechselwirkung zwischen Langstator und Sekundärteil erzeugt wird, reduziert.

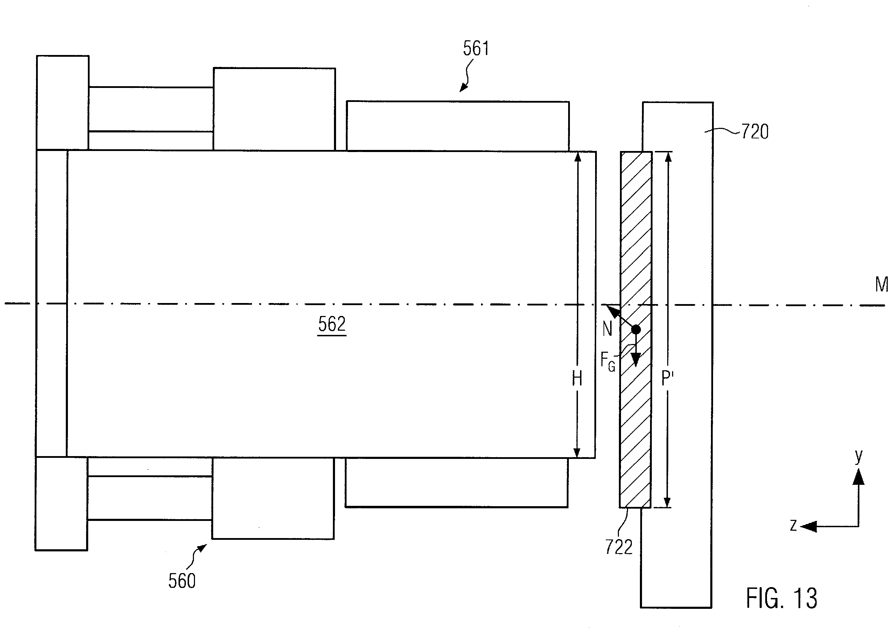

Diese Reduktion lässt sich vermeiden, wenn, wie in Figur 13 schematisch gezeigt, die Magnete 722 des Sekundärteils 720 mit einer größeren Höhe P' ausgebildet werden als der Eisenkern 562. In der dargestellten, nicht limitierenden Weiterbildung überlappen die Magnete 722 vollständig mit dem Eisenkern 562 und ragen zusätzlich um einen bestimmten Betrag unten über den Eisenkern 562 hinaus. Als Resultat dieser asymmetrischen Anordnung ergibt sich erneut eine schräg nach oben gerichtete magnetische Wechselwirkungskraft N, welche die senkrecht nach unten gerichtete Gewichtskraft FG zumindest teilweise kompensiert. Dies gilt auch, wenn die Magnete des Sekundärteils 720 sowohl nach oben als auch nach unten über den Eisenkern 562 hinausragen, der untere Überstand jedoch größer als der obere Überstand ist. Mit dieser Weiterbildung lässt sich somit auch ohne Verlust an Vortriebskraft eine Reduzierung der auf den Tragrollen lastenden Gewichtskraft und damit des mechanischen Verschleißes der Tragrollen erzielen.

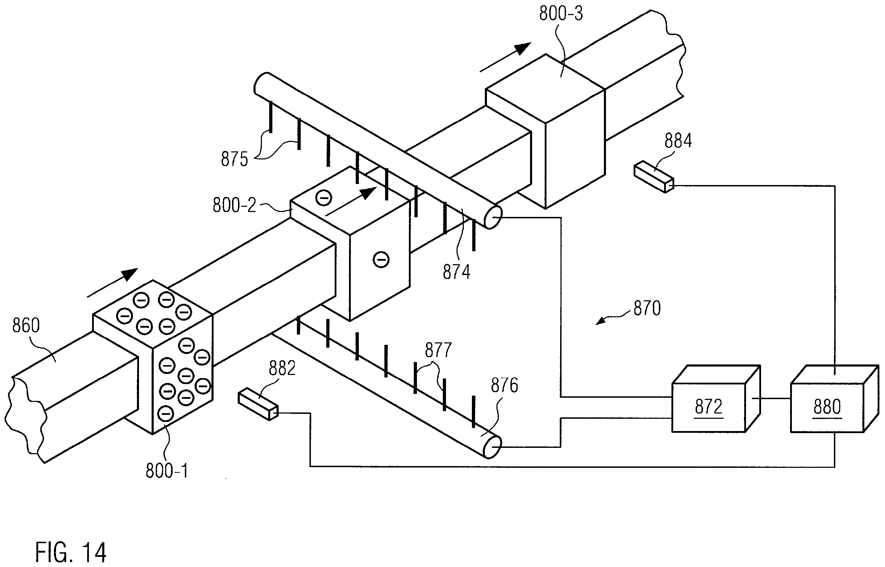

In der Figur 14 ist eine dreidimensionale Darstellung eines Langstator-Linearmotorsystems mit einer Entladungsstation zum berührungslosen Entladen bzw. Laden von Läufern gezeigt. Dabei sind die Läufer 800-1 bis 800-3 und der Linearmotorstrang 860 sowie die Transportbahn und Führungsschienen lediglich schematisch angedeutet.

Aufgrund der durch die Bewegung der Läufer entlang der Transportbahn, insbesondere der Führungsschienen, erzeugten Reibungselektrizität werden die Läufer zunehmend elektrostatisch aufgeladen. Dies ist in der Figur 14 beispielhaft anhand des mit negativen Ladungen aufgeladenen Läufers 800-1 gezeigt. Die elektrostatische Aufladung der Läufer kann bei unkontrollierter Entladung Personen oder Bauteilen Schaden zufügen.

Um die Läufer berührungslos zu entladen, ist gemäß der hier dargestellten Weiterbildung an mindestens einer Stelle der Transportbahn 860 eine Entladungsvorrichtung 870 angeordnet, die von den zu entladenden Läufern 800-1 passiert wird. Die Entladungsvorrichtung 870 ist in dieser Weiterbildung als Hochspannungsionisator 872 mit stabförmigen Elektroden 874 und 876 ausgebildet, die quer zur durch die Pfeile angedeuteten Bewegungsrichtung der Läufer 800-2 angeordnet sind. Die Elektroden 874 und 876 weisen eine Reihe von in Richtung der Läufer 800-2 ausgerichteten Spitzenelektroden 875 und 877 auf, an denen mittels Koronaentladung und Feldemission durch Ionisieren der umgebenden Luft Ionen gebildet werden. Der Hochspannungsionisator 872 ist in dieser Weiterbildung dazu ausgebildet, insbesondere positive Ionen zu generieren, die in Kontakt mit der Oberfläche des Läufers 800-2 die negativen Ladüngen neutralisieren. Nach Durchgang durch die Entladungsstation 870 ist somit der Läufer 800-3 von seiner elektrostatischen Ladung befreit.

Die in der Figur 14 gezeigte, nicht limitierende Weiterbildung umfasst weiterhin eine Steuereinrichtung 880, sowie einen stromaufwärts von der Entladungsstation 870 angeordneten Potenzialsensor 882, der mit der Steuereinrichtung 880 über eine Signalleitung verbunden ist. Mittels des an der Transportbahn 860 angeordneten Potenzialsensors 882 werden die Polarität und der Betrag der elektrostatischen Aufladung des Läufers 800-1 im Zulauf zur Entladungsstation 870 bestimmt und an die Steuereinrichtung 880 weitergegeben. Diese steuert im Gegenzug den Hochspannungsgenerator des Hochspannungsionisators 872 derart, dass die von den Elektroden 875 und 877 erzeugten Ionen in ausreichender Menge und Polarität erzeugt werden, um den sich im Bereich der Entladungsstation befindlichen Läufer 800-2 vollständig zu neutralisieren.

Zusätzlich umfasst die in der Figur 14 gezeigte Weiterbildung einen weiteren Potenzialsensor 884, der stromabwärts von der Entladungsstation 870 angeordnet ist und über eine Signalleitung mit der Steuereinrichtung 880 verbunden ist. Mittels dieses weiteren Potenzialsensors 884 kann der Entladungserfolg kontrolliert werden, sodass die Steuereinrichtung 880 in Abhängigkeit von dem von dem Potenzialsensor 884 gemessenen Signal eine Steuerung des Hochspannungsgenerators 872 vornehmen kann.

Der Hochspannungsionisator 870 kann wie oben erwähnt auch zum gezielten Aufbringen von Ladung auf ungeladene Läufer (nicht dargestellt) verwendet werden. In diesem Fall kann mittels des Potenzialsensors 884 die Menge der aufgebrachten Ladung kontrolliert werden. Insbesondere kann durch gezieltes Aufladen der Läufer mit läuferspezifischen Ladungsmengen eine eindeutige Identifizierung, beispielsweise zum Zwecke der Produktverfolgung, einzelner Läufer mittels stromabwärts von der Entladungsstation 870 angeordneter Potenzialsensoren 884 ermöglicht werden.

Die dargestellte Entladungsvorrichtung 870 arbeitet zuverlässiger und wartungsärmer, da berührungslos, als die auf mechanischem Kontakt basierenden Entladungsvorrichtungen des Stands der Technik. Das beschriebene Langstator-Linearmotorsystem erzielt damit eine längere Standzeit und weist geringere Wartungskosten auf.

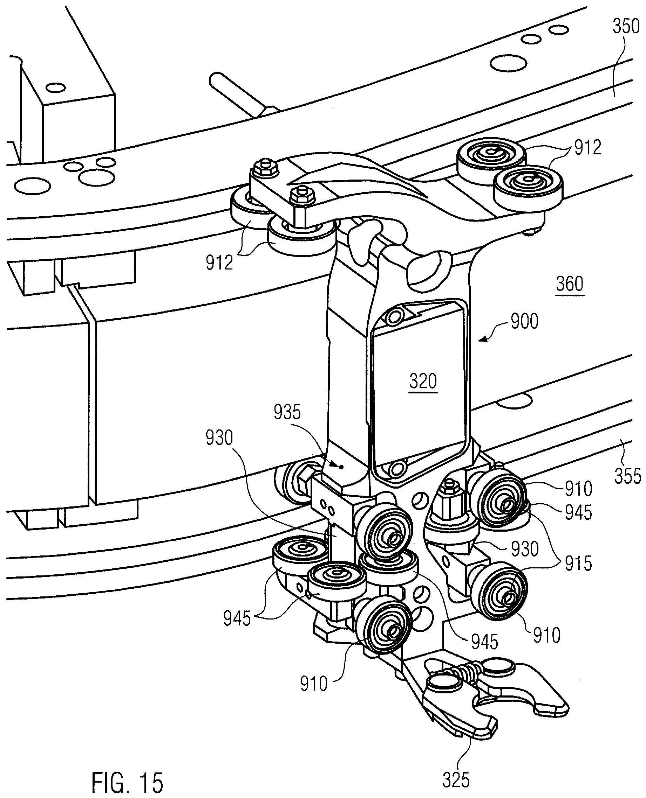

In Figur 15 ist schließlich eine alternative Weiterbildung der Drehschemellenkung dargestellt, wobei die Änderung der Drehstellungen der Drehschemel mittels Führungsrollen als Führungselemente bewirkt wird.

Der schematisch dargestellte Läufer 900 ist mittels Führungsrollen 912 und Tragrollen 910 an den Führungsschienen 350 und 355 gelagert und wird mittels Wechselwirkung des Sekundärteils 320 mit dem Langstator 360 bewegt. Anders als bei den Führungsrollen 912, deren Rollenachsen senkrecht zur Bewegungsebene ausgerichtet sind, sind in dieser Weiterbildung die Rollenachsen 915 der Tragrollen 910 parallel zur Führungsebene ausgerichtet. Somit träte ohne Lenkung der bekannte Spurfehler bei den Tragrollen 910 auf.

Gemäß der in der Figur 15 gezeigten Weiterbildung wird die automatische Änderung der Drehstellung der Drehschemel 930, an denen die Tragrollen 910 gelagert sind, über Führungsrollen 945 bewirkt, die ebenfalls an dem jeweiligen Drehschemel 930 gelagert sind und somit ein in der Führungsebene verschwenkbares Führungselement 945 bilden. Exemplarisch sind in der Figur jeweils vier Führungsrollen gezeigt, die an einem Drehschemel 930 angeordnet sind. Es genügt jedoch bereits eine einzige solche Führungsrolle, solange ihre Rotationsachse in bzw. entgegen der Fahrtrichtung gegenüber der Drehachse des Drehschemels versetzt angeordnet ist.

Eine Änderung des Kurvenradius, wie er beispielsweise beim Übergang in die Kurvenfahrt erfolgt, bewirkt somit ein Verschwenken des oder der Führungsrollen 945 um den Lagerbolzen 935 des Drehschemels 930, was seinerseits zu einer Änderung der Drehstellung des Drehschemels 930 führt. Dies bewirkt eine automatische Korrektur des Spurfehlers der Tragrollen 910, die an dem Drehschemel 930 gelagert sind. Dabei ist die Korrektur optimal, wenn die Tragrollen 910, wie in der Figur 15 gezeigt, in Fahrtrichtung zentriert an den Drehschemeln 930 angeordnet sind.

## Patentansprüche

1. Läufer (300) für ein Langstator-Linearmotorsystem, umfassend:
wenigstens ein Sekundärteil (320) zur magnetischen Wechselwirkung mit wenigstens einem Langstator (360) des Langstator-Linearmotorsystems;
wenigstens zwei Rollen (310; 410) zur Lagerung des Läufers an parallelen Führungsschienen (350, 355) des Langstator-Linearmotorsystems;
**gekennzeichnet durch**
wenigstens eine Rolle (410) der wenigstens zwei Rollen (310; 410) mit einer Lenkungsdrehachse mit integriertem Nachlauf ausgebildet ist,
wobei die wenigstens eine Rolle (410) mittels eines Bolzens (413) über eine asymmetrische und/oder schräge Bohrung an einer Rollenachse (415) gelagert ist und weiterhin einen an dem Bolzen gelagerten Pendelring (414) mit außenliegendem Wälz- oder Gleitlager (416) aufweist;
wobei die Bohrung quer zur Rollenachse vorgesehen ist, wobei die Bohrung außermittig durch die Rollenachse und/oder schräg zur Bewegungsebene ausgebildet ist;
wobei der Pendelring derart ausgebildet ist, dass er innerhalb eines vorgegebenen Winkelbereichs um die Geradeausstellung pendeln kann und wobei auch der Pendelring außermittig und/oder schräg an dem Bolzen gelagert ist.

2. Läufer nach Anspruch 1, weiterhin umfassend:
wenigstens einen Drehschemel (330), auf dem wenigstens eine Rolle, insbesondere wenigstens ein Rollenpaar der wenigstens zwei Rollen (310; 410) drehbar gelagert ist.

3. Läufer nach Anspruch 2,
wobei der Läufer (300) wenigstens ein senkrecht zur Fahrtrichtung verschiebbares oder in einer Führungsebene verschwenkbares Führungselement (345) aufweist, das dazu ausgebildet ist, in mechanischem oder magnetischem Eingriff mit dem Langstator-Linearmotorsystem, insbesondere mit einer Führungsschiene (350) oder einer Steuerkurve, einen konstanten Abstand von der Führungsschiene oder der Steuerkurve zu wahren; und
wobei der Drehschemel (330) derart mit dem Führungselement (345) verbunden ist, dass eine Verschiebung des Führungselements senkrecht zur Fahrtrichtung oder eine Verschwenkung des Führungselements in der Führungsebene eine Änderung der Drehstellung des Drehschemels bewirkt.

4. Läufer nach Anspruch 3, wobei das Führungselement (345) eine Führungsrolle, einen Gleitschuh oder einen Führungsstift umfasst.

5. Läufer nach Anspruch 3 oder 4, wobei der Drehschemel (330) mit dem Führungselement (345) über wenigstens ein Verbindungselement (340) verbunden ist, wobei das Verbindungselement derart ausgebildet ist, dass eine Verschiebung des Führungselements bei Kurvenfahrt zum Kurvenäußeren hin eine Ausrichtung des Drehschemels in Richtung Kurvenradius bewirkt.

6. Läufer nach Anspruch 5, wobei das Verbindungselement eine zwei Drehschemel (330) miteinander verbindende elastische Schiene oder Stange umfasst, die derart in Eingriff mit dem Führungselement (345) steht oder mit diesem verbunden ist, dass eine Verschiebung des Führungselements eine elastische Verformung der Schiene oder Stange bewirkt.

7. Läufer nach Anspruch 5, wobei das Verbindungselement einen zwei Drehschemel (330) jeweils formschlüssig, insbesondere über eine Nut (346), miteinander verbindenden starren Schieber (340) umfasst, der derart in Eingriff mit dem Führungselement (345) steht oder mit diesem verbunden ist, dass eine Verschiebung des Führungselements eine Verschiebung des Schiebers senkrecht zur Fahrtrichtung bewirkt.

8. Läufer nach einem der vorhergehenden Ansprüche, wobei die Rollen (310; 410) ein konkaves Abrollprofil aufweisen, das derart ausgebildet ist, dass die Rollen auf einer Oberfläche der Führungsschienen (350, 355) seitenstabil abrollen.

9. Läufer nach einem der vorhergehenden Ansprüche, wobei die Rollenachse der wenigstens einen Rolle (310; 410) parallel oder schräg zu einer Bewegungsebene des Läufers (300) angeordnet ist.

10. Läufer nach einem der vorhergehenden Ansprüche, wobei die wenigstens eine Rolle (410) weiterhin einen an dem Wälz- oder Gleitlager (416) gelagerten Außenring (417) umfasst.

11. Läufer nach einem der vorhergehenden Ansprüche, wobei der Bolzen (413) mit der Rollenachse (415) drehfest verbunden ist und der Pendelring (414) an dem Bolzen (413) drehbar gelagert ist.

12. Läufer nach einem der Ansprüche 1 bis 10, wobei der Pendelring (414) mit dem Bolzen (413) drehfest verbunden ist und der Bolzen (413) drehbar an der Rollenachse (415) gelagert ist.

13. Läufer nach einem der vorhergehenden Ansprüche, wobei ein Innendurchmesser des Pendelrings (414) um einen vorgegebenen Betrag größer als ein Durchmesser der Rollenachse (415) ist, sodass zwischen Rollenachse und Pendelring ein Ringspalt (418) gebildet wird, und/oder wobei der Pendelring (414) innenseitig Aussparungen aufweist, die ein Pendeln um die Rollenachse (415) ermöglichen.

14. Läufer nach Anspruch 13, wobei der Pendelring (414) mittels eines oder mehrerer Distanzelemente, durch Ausbildung des Bolzens (413) als abgesetzter Bolzen und/oder durch Presspassung oder Klebung an dem Bolzen (413) von der Rollenachse (415) beabstandet ist.

15. Langstator-Linearmotorsystem mit einer Vielzahl von Läufern (300) nach einem der vorhergehenden Ansprüche, und weiterhin umfassend:
eine Transportbahn mit wenigstens zwei parallelen Führungsschienen (350, 355), an denen die Läufer beweglich gelagert sind, wobei je eine Rolle (310; 410) eines Rollenpaares der Läufer an einer der zwei Führungsschienen und die andere Rolle (310; 410) des Rollenpaares an der anderen der zwei Führungsschienen gelagert ist, und
wobei die Transportbahn wenigstens ein gerades Stück und wenigstens ein Kurvenstück und/oder Kurvenstücke mit verschiedenen Krümmungsradien umfasst.

## Claims

1. Rotor (300) for a long-stator linear motor system, having
at least one secondary part (320) for magnetic interaction with at least one long stator (360) of the long-stator linear motor system;
at least two rollers (310; 410) for mounting the rotor on parallel guide rails (350, 355) of the long-stator linear motor system,
**characterized by**
at least one roller (410) of the at least two rollers (310; 410) with a steering rotational axis with integrated castor,
wherein the at least one roller (410) is mounted on a roller axle (415) by means of a bolt (413), via an asymmetric and/or sloping bore, and further comprises a pendulum ring (414), which is mounted on the bolt and has an external ball or slide bearing (416);
wherein the bore is provided transverse to the roller axle, whereby the bore is made eccentric through the roller axle and/or oblique to the plane of movement;
wherein the pendulum ring is designed in such a way that it can oscillate around the straight position within a specified angular range, and wherein the pendulum ring is also eccentrically and/or obliquely mounted on the bolt.

2. Rotor according to claim 1, further comprising:
at least one rotatable bolster (330), on which at least one roller, in particular at least one pair of rollers, of the at least two rollers (310; 410) is rotatably mounted.

3. Rotor according to claim 2,
wherein the rotor (300) comprises at least one guide element (345) which can be displaced perpendicular to the direction of travel or pivoted in a guide plane and which is designed to maintain a constant distance from a guide rail or a control cam in mechanical or magnetic engagement with the long-stator linear motor system, in particular with the guide rail (350) or the control cam; and
wherein the rotatable bolster (330) is connected to the guide element (345) in such a way that a displacement of the guide element perpendicular to the direction of travel or a pivoting of the guide element in the guide plane causes a change in the rotary position of the rotatable bolster.

4. Rotor according to claim 3, wherein the guide element (345) comprises a guide roller, a sliding shoe or a guide pin.

5. Rotor according to claim 3 or 4, wherein the rotatable bolster (330) is connected to the guide element (345) via at least one connecting element (340), wherein the connecting element is designed such that displacement of the guide element during cornering toward the outside of the curve causes an alignment of the rotatable bolster towards curve radius.

6. Rotor according to claim 5, wherein the connecting element comprises an elastic rail or rod connecting two rotatable bolsters (330) together, which is in engagement with or is connected to the guide element (345) such that displacement of the guide element causes an elastic deformation of the rail or rod.

7. Rotor according to claim 5, wherein the connecting element comprises a rigid slide (340) which interconnects two rotatable bolsters (330) in each case in a positive manner, in particular via a groove (346), and which is in engagement with or connected to the guide element (345) in such a way that a displacement of the guide element causes a displacement of the slide perpendicular to the direction of travel.

8. Rotor according to one of the preceding claims, wherein the rollers (310; 410) have a concave roll-off profile configured such that the rollers roll in a laterally stable manner on a surface of the guide rails (350, 355).

9. Rotor according to one of the preceding claims, wherein the roller axle of the at least one roller (310; 410) is arranged parallel or obliquely to a plane of movement of the rotor (300).

10. Rotor according to one of the preceding claims, wherein the at least one roller (410) further comprises an outer ring (417) mounted on the ball or slide bearing (416).

11. Rotor according to one of the preceding claims, wherein the bolt (413) is non-rotatably connected to the roller axle (415) and the pendulum ring (414) is rotatably mounted on the bolt (413).

12. Rotor according to one of claims 1 to 10, wherein the pendulum ring (414) is non-rotatably connected to the bolt (413) and the bolt (413) is rotatably mounted on the roller axle (415).

13. Rotor according to one of the preceding claims, wherein an inner diameter of the pendulum ring (414) is greater than a diameter of the roller axle (415) by a predetermined amount, so that an annular gap (418) is formed between the roller axle and the pendulum ring, and/or wherein the pendulum ring (414) comprises recesses on the inside which permit oscillation about the roller axle (415).

14. Rotor according to claim 13, wherein the pendulum ring (414) is spaced from the roller axle (415) by means of one or more spacer elements, by forming the bolt (413) as a stepped bolt and/or by press fitting or adhesive bonding to the bolt (413).

15. A long-stator linear motor system comprising a plurality of rotors (300) according to one of the preceding claims, and further comprising:
a transport path having at least two parallel guide rails (350, 355) on which the rotors are movably mounted, wherein a respective roller (310; 410) of a pair of rollers of the rotors is mounted on one of the two guide rails and the other roller (310; 410) of the pair of rollers is mounted on the other of the two guide rails, and
wherein the transport path comprises at least one straight piece and at least one curved piece and/or curved pieces with different radii of curvature.

## Revendications

1. Organe mobile (300) pour un système de moteur linéaire à stator long, comprenant :
au moins une partie secondaire (320) permettant une interaction magnétique avec au moins un stator long (360) du système de moteur linéaire à stator long ;
au moins deux rouleaux (310 ; 410) permettant le montage de l'organe mobile sur des rails de guidage (350, 355) parallèles du système de moteur linéaire à stator long ;
**caractérisé en ce que**
au moins un rouleau (410) parmi les au moins deux rouleaux (310 ; 410) est réalisé avec un axe de rotation de direction à déport intégré,
dans lequel le au moins un rouleau (410) est monté sur un axe de rouleau (415) au moyen d'un goujon (413) par l'intermédiaire d'un alésage asymétrique et/ou oblique et présente en outre une bague oscillante (414) montée sur le goujon avec un palier à roulement ou un palier lisse (416) situé à l'extérieur ;
dans lequel l'alésage est fourni transversalement par rapport à l'axe de rouleau, dans lequel l'alésage est réalisé de manière excentrée à travers l'axe de rouleau et/ou de manière oblique par rapport au plan de déplacement ;
dans lequel la bague oscillante est réalisée de telle manière qu'elle peut osciller autour de la position droite à l'intérieur d'une plage angulaire prédéterminée, et dans lequel la bague oscillante est également montée de manière excentrée et/ou oblique sur le goujon.

2. Organe mobile selon la revendication 1, comprenant en outre :
au moins un plateau rotatif (330) sur lequel au moins un rouleau, en particulier au moins une paire de rouleaux des au moins deux rouleaux (310 ; 410), est monté rotatif.

3. Organe mobile selon la revendication 2,
dans lequel l'organe mobile (300) présente au moins un élément de guidage (345) pouvant être décalé perpendiculairement par rapport à la direction de déplacement ou pouvant être pivoté dans un plan de guidage et qui est conçu pour maintenir une distance constante par rapport à un rail de guidage ou à une came de commande en étant en prise mécanique ou magnétique avec le système de moteur linéaire à stator long, en particulier avec le rail de guidage (350) ou la came de commande ; et
dans lequel le plateau rotatif (330) est relié à l'élément de guidage (345) de telle manière qu'un décalage de l'élément de guidage perpendiculairement à la direction de déplacement ou un pivotement de l'élément de guidage dans le plan de guidage entraîne une modification de la position de rotation du plateau rotatif.

4. Organe mobile selon la revendication 3, dans lequel l'élément de guidage (345) comprend un rouleau de guidage, un patin de glissement ou une goupille de guidage.

5. Organe mobile selon la revendication 3 ou 4, dans lequel le plateau rotatif (330) est relié à l'élément de guidage (345) par l'intermédiaire d'au moins un élément de liaison (340), dans lequel l'élément de liaison est conçu de telle manière qu'un décalage de l'élément de guidage vers l'extérieur de la came lors du déplacement sur came provoque une orientation du plateau rotatif en direction du rayon de came.

6. Organe mobile selon la revendication 5, dans lequel l'élément de liaison comprend un rail ou une tige élastique qui relie deux plateaux rotatifs (330) et est en prise avec l'élément de guidage (345) ou est relié à celui-ci de telle manière qu'un décalage de l'élément de guidage provoque une déformation élastique du rail ou de la tige.

7. Organe mobile selon la revendication 5, dans lequel l'élément de liaison comprend un coulisseau rigide (340) qui relie deux plateaux rotatifs (330) respectivement par complémentarité de forme, en particulier par l'intermédiaire d'une rainure (346), et qui est en prise avec l'élément de guidage (345) ou est relié à celui-ci de telle manière qu'un décalage de l'élément de guidage provoque un décalage du coulisseau perpendiculairement par rapport à la direction de déplacement.

8. Organe mobile selon l'une quelconque des revendications précédentes, dans lequel les rouleaux (310 ; 410) présentent un profil de roulement concave qui est conçu de telle manière que les rouleaux roulent de manière latéralement stable sur une surface des rails de guidage (350, 355).

9. Organe mobile selon l'une quelconque des revendications précédentes, dans lequel l'axe de rouleau du au moins un rouleau (310 ; 410) est agencé parallèlement ou obliquement par rapport à un plan de déplacement de l'organe mobile (300).

10. Organe mobile selon l'une quelconque des revendications précédentes, dans lequel le au moins un rouleau (410) comprend en outre une bague extérieure (417) montée sur le roulement ou le palier lisse (416).

11. Organe mobile selon l'une quelconque des revendications précédentes, dans lequel le goujon (413) est relié de manière solidaire en rotation à l'axe de rouleau (415) et la bague oscillante (414) est montée de manière à pouvoir tourner sur le goujon (413).

12. Organe mobile selon l'une quelconque des revendications 1 à 10, dans lequel la bague oscillante (414) est reliée de manière solidaire en rotation au goujon (413) et le goujon (413) est monté de manière à pouvoir tourner au niveau de l'axe de rouleau (415).

13. Organe mobile selon l'une quelconque des revendications précédentes, dans lequel un diamètre intérieur de la bague oscillante (414) est supérieur d'une quantité prédéterminée à un diamètre de l'axe de rouleau (415), de sorte qu'un espace annulaire (418) est formé entre l'axe de rouleau et la bague oscillante, et/ou dans lequel la bague oscillante (414) présente des évidements du côté intérieur qui permettent une oscillation autour de l'axe de rouleau (415).

14. Organe mobile selon la revendication 13, dans lequel la bague oscillante (414) est espacée par rapport à l'axe de rouleau (415) au moyen d'un ou de plusieurs élément(s) d'écartement, grâce à la conception du goujon (413) sous forme de goujon décalé et/ou grâce à un frettage ou un collage sur le goujon (413).

15. Système de moteur linéaire à stator long, comprenant une pluralité d'organe mobiles (300) selon l'une quelconque des revendications précédentes, et comprenant en outre :
une voie de transport avec au moins deux rails de guidage (350, 355) parallèles sur lesquels les organes mobiles sont montés mobiles, dans lequel respectivement un rouleau (310 ; 410) d'une paire de rouleaux des organes mobiles est monté sur un des deux rails de guidage, et l'autre rouleau (310 ; 410) de la paire de rouleaux est monté sur l'autre des deux rails de guidage, et
dans lequel la voie de transport comprend au moins une pièce droite et au moins une pièce formant came et/ou des pièces formant came présentant différents rayons de courbure.
